# EUROPEAN PATENT SPECIFICATION

(11) **EP 4 514 879 B1**
(45) Date of publication and mention of the grant of the patent: **04.03.2026**
(21) Application number: 23721342.6
(22) Date of filing: 20.04.2023
(51) Int. Cl.: C08G 64/14, C08G 64/24

(54) **POLYCARBONATE WITH PHENOLIC BUILDING BLOCKS AND LOW CHLORINE CONTENT**
POLYCARBONAT MIT PHENOLBAUSTEINEN UND NIEDRIGEM CHLORGEHALT
POLYCARBONATE À BASE DE BLOCS DE CONSTRUCTION PHÉNOLIQUES ET À FAIBLE TENEUR EN CHLORE

(30) Priority: 27.04.2022 EP 22170241
(43) Date of publication of application: 05.03.2025
(73) Proprietor: Covestro Deutschland AG, 51373 Leverkusen (DE)
(72) Inventor: GARSKA, Bernd, 51103 Köln (DE); HEIJL, Jan, 9940 Evergem (BE); BERTIN, Annabelle, 2020 Antwerpen (BE); MEINE, Niklas, 40223 Düsseldorf (DE)
(74) Representative: Levpat
(86) International application number: PCT/EP2023/060292
(87) International publication number: WO 2023/208723

(56) References cited:
- WO-A2-2015/168225
- US-B2- 8 247 619
- S.-F. KOELEWIJN ET AL: "Sustainable bisphenols from renewable softwood lignin feedstock for polycarbonates and cyanate ester resins", GREEN CHEMISTRY, vol. 19, no. 11, 1 January 2017 (2017-01-01), GB, pages 2561 - 2570, XP055590697, ISSN: 1463-9262, DOI: 10.1039/C7GC00776K

## Description

The present invention relates to polycarbonates comprising specific phenolic building blocks, which are terminated with at least one aromatic group which can be optionally terminated with at least one C₁-C₆ alkyl group, have a saponifiable chlorine content of 0.2 ppm to 19 ppm and a number average molecular weight of 8 000 g/mol to 20 000 g/mol, a molding compound comprising said polycarbonate, a molded article comprising said polycarbonate and a process for preparing a specific polycarbonate.

Polycarbonates, especially aromatic polycarbonates, are known to exhibit a good property profile with respect to mechanical and optical properties, heat resistance and weatherability. Due to this property profile they are used in various indoor and outdoor applications. Typically polycarbonates are prepared by the interphase phosgenation process or the melt transesterification method.

Lignocellulosic biomass has been acknowledged for potential use to produce chemicals and biomaterials. It comprises cellulose, hemicellulose and lignin. Lignin is a highly cross-linked macromolecule composed of different types of substituted phenols. Respective processing of lignin can provide various bisphenols and as such lignin promises to be a potential substitute for petrochemically used compounds, but based on natural and renewable sources at affordable costs.

Some studies have been already performed focusing on the provision of bisphenols from lignin. For example, WO2019/002503Al describes a process for producing *ortho-alkoxy* bisphenols which may be used as reactants for the preparation of biopolymers. This document mentions the reaction of those bisphenol compounds with phosgene to a polycarbonate. However, in the experimental part no such reaction has been conducted.

WO2018/134427 A1 relates to the production of highly pure *meta, meta-coupled* bis(4-alkylphenol) derivatives from lignin-derived sources. The resulting bisphenols are said to be useful monomers for the production of polycarbonates using *inter alia* phosgene. However, also in this document no polycarbonate is prepared.

In Green Chem., 2017, 19, 2561-2570 a polycarbonate is synthesized using *meta, meta*'-bis(4-alkylguaiacol) and triphosgene via a standard lab scale procedure. In this paper, the end group content of the resulting polycarbonate is not indicated, but due to the procedure the resulting saponifiable chlorine content most likely is high. The resulting molecular weights given in this paper indicate that the reaction was not complete. However, the chlorine content of polycarbonate has an impact on the resulting optical properties. The higher the chlorine content the higher the yellowness index and also the tendency to yellow. This limits possible applications of a polycarbonate. Moreover, the chlorine content makes the polycarbonate corrosive to pipes and reactors and thus, a polycarbonate having a high chlorine content cannot be handled in an upscaled process and/or in diverse applications such as injection molding, extrusion *etc..* Finally, this paper does not disclose the use of a chain terminator.

In CN105461912 A the reaction of specific bisphenols with triphosgene is described, too. In this prior art document no chain terminator is used and this document is silent with respect to the resulting terminal groups. However, due to the reaction the terminal groups most likely are -Cl or -OH. Both groups normally need to be reduced in polycarbonate resins. As has been described above, the saponifiable chlorine content has an impact on the optical properties. A high -OH-content negatively influences the thermostability of the polycarbonate. The polycarbonate has a tendency of yellowing upon exposure to heat.

WO2015/183892A1 describes the synthesis of new reactive functionalized phenolic building blocks. In example 46 the synthesis of bisguaiacol polycarbonates is described. Bisguaiacol F is reacted with nitrochloroformate in acetonitrile. In this example, no chain terminator is used. As a consequence the resulting polycarbonate has either -Cl or -OH terminal groups. Moreover, the resulting polycarbonate has a weight average molecular weight of 13,200 g/mol relative to polystyrene standards. This means that the obtained polycarbonate has a very low molecular weight indicating that mechanical properties of the polycarbonate might not be sufficient for any application in which typically bisphenol A based polycarbonates are used.

WO2015/168225A2 describes the reaction of alkoxy bisphenols to polycarbonates by interphase phosgenation. In example 5 of this document a polycarbonate based on 4,4'-(2-isopropylidene-bis(2-methoxy)phenol (PBMP) is prepared using the interphase phosgenation and p-cumylphenol as endcapping agent. The resulting polycarbonate has a dry chloride content of 21 ppm and a number average molecular weight (Mₙ) of 6,600 g/mol (measured by GPC and PC standard). Such a molecular weight is undesirable with respect to the resulting mechanical properties. In addition, the resulting viscosity of the polycarbonate will not be sufficient to fulfill the common market needs, which are based on the usage of bisphenol A based polycarbonates. Moreover, the dry chloride content is still too high when considering the market needs and application possibilities.

This document describes a process for preparing the polycarbonate wherein a suspension (no solution) of the bisphenol is provided and phosgene is added to this suspension. The pH of this mixture is maintained at 9. Typically polymerization reactions in suspension are not easy to control (especially when compared to polymerizations in solution). Often the resulting polymers have a high polydispersity and can lead to incomplete reactions. For example, this can be seen from the relatively small molecular weights which are obtained in this document. Finally, it is clear that any teaching with respect to a suspension polymerization cannot be directly transferred to a polymerization in solution due to the fundamentally different reaction systems.

From the prior art as cited above, it can be seen that the skilled person knows how to prepare specific bisphenols from lignin. In the examples of those documents clear instructions as to the fact how to prepare these bisphenols can be found. Those examples are incorporated herein by reference for the sake of the provision of the bisphenols from lignin. For example, the synthesis of 4,4'-propylidenebis(2-methoxyphenol) is described in WO2019/002503 A1.

Based on this prior art, there is a need to provide and prepare a polycarbonate based on natural and renewable resources. Moreover, there is a need to provide a polycarbonate which can be prepared on industrial scale. Additionally, this polycarbonate should exhibit comparable properties (e. g. with respect to processing, mechanical and optical properties, especially yellowing) to the standard bisphenol A-based polycarbonate on the market. Finally, an efficient, economically and ecologically advantageous process for preparing such polycarbonates is needed.

At least one of the above-mentioned objects, preferably all of these objects have been solved by the present invention.

Surprisingly, the inventors found that when using the process according to the present invention, a polycarbonate can be obtained having a molecular weight which is high enough to ensure good mechanical properties, preferable comparable mechanical properties when compared to a polycarbonate based on bisphenol A having a comparable molecular weight. Moreover, the obtained polycarbonate exhibits good optical properties, especially with respect to yellowness index and /or yellowing. Moreover, due to the process according to the present invention, it is possible to obtain a polycarbonate having a saponifiable chlorine content of 0.2 ppm to 19 ppm. This low saponifiable chlorine content leads to the fact that the polycarbonate has a low tendency to yellow. Moreover, the polycarbonate itself is not corrosive and therefore can be handled in pipes and reactors in an industrial scale and respective further processing for application such as injection molding, extrusion or the like. In addition, the fact that the polymer chains are terminated with at least one aromatic group which can be optionally terminated with at least one C₁-C₆ alkyl group reduces the amount of terminal -OH groups. This positively influences the thermostability of the polycarbonate. Finally, the polycarbonate of the present invention is a polycarbonate which can be obtained using bisphenols obtained from lignin. Thus, the polycarbonate of the present invention can be based on natural and renewable bisphenols. Accordingly, the polycarbonate of the present invention comprises at least 30 wt.-% of the specific structural units as defined below. This results in the fact that when the bisphenol used to obtain such specific structural unit is based on natural and/or renewable bisphenols, the resulting polycarbonate comprises a high content of the structural unit(s) derived from the natural and/or renewable bisphenol.

Accordingly, the present invention provides a polycarbonate comprising, preferably comprising at least 30 wt-% of structural units of formula (1), wherein the wt.-% is based on the total weight of the polycarbonate, 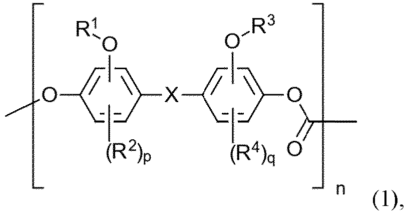 wherein
each X independently represents a single bond, -O-, -S-, -S(O)-, -S(O)₂-, -C(O)-, or an organic group having 1 to 18 carbon atoms, wherein the organic group having 1 to 18 carbon atoms can be linear, branched or cyclic, aromatic or non-aromatic, and can further comprise heteroatoms such as halogens, oxygen, nitrogen, sulfur, silicon or phosphorous,
each of R¹ and R³ independently represents a monovalent hydrocarbon group, preferably C₁-C₂₆-alkyl, C₇-C₂₆ alkylaryl or C₇-C₂₆-aralkyl,
each of R² and R⁴ independently represents a hydrogen atom, an alkoxy group, or a monovalent hydrocarbon group, preferably a hydrogen atom, C₁-C₆-alkoxy or C₁-C₆-alkyl, and
each of p and q independently is 1 or 2, preferably 1 and
n represents the average number of repeating units,
characterized in that the polycarbonate is terminated with at least one aromatic group which can be optionally terminated, preferably substituted with at least one C₁-C₆ alkyl group, has a total saponifiable chlorine content of 0.2 ppm to 19 ppm with respect to the mass of the polycarbonate and a number average molecular weight of 8 000 g/mol to 20 000 g/mol as determined *via* gel permeation chromatography in dichloromethane using a bisphenol A-polycarbonate calibration.

Polycarbonates in the context of the present invention are either homopolycarbonates or copolycarbonates. The polycarbonates may be linear or branched depending on the type of monomers used in the process of the present invention.

Preferably, the polycarbonate according to the present invention is bio-based. For the purposes of the present invention, the expression "bio-based" is understood as meaning that the relevant chemical compound is at the filing date available and/or obtainable *via* a renewable and/or sustainable raw material. A renewable and/or sustainable raw material is preferably understood as meaning a raw material that is regenerated by natural processes at a rate that is comparable to its rate of depletion (see CEN/TS 16295:2012). The expression is used in particular to distinguish it from raw materials produced from fossil raw materials, also referred to in accordance with the invention as fossil-based. As an example, most bisphenol A based polycarbonates represents commonly known fossil-based polycarbonates. Whether a raw material is bio-based or fossil-based can be determined by the measurement of carbon isotopes in the raw material, since the relative amounts of the carbon isotope C¹⁴ are lower in fossil raw materials. This can be done, for example, in accordance with ASTM D6866-18 (2018) or ISO16620-1 to -5 (2015) or DIN SPEC 91236 2011-07. Exemplary bio-based materials are bisphenols as obtained from lignin.

Preferably, in formula (1)
each X independently represents a substituted or unsubstituted C₃-C₁₈-cycloalkylidene; a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula -C(=R^{c})- wherein R^{c} is a divalent C₁ -C₁₂-hydrocarbon group,
each of R¹ and R³ independently represents C₁-C₂₆-alkyl, C₇-C₂₆ alkylaryl or C₇-C₂₆-aralkyl,
each of R² and R⁴ independently represents a hydrogen atom, C₁-C₆-alkoxy or C₁-C₆-alkyl, and
each of p and q independently is 1 and n represents the average number of repeating units.

Preferably, X can be a substituted or unsubstituted C₃-C₁₈-cycloalkylidene; a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula -C(=R^{c})- wherein R^{c} is a divalent C₁ -C₁₂-hydrocarbon group. Still preferably, each of R¹ and R³ independently represents C₁-C₂₆-alkyl, C₇-C₂₆ alkylaryl or C₇-C₂₆-aralkyl. Even more preferably each of R¹ and R³ independently represents methyl, ethyl, propyl, octyl, isooctyl, benzyl, ethylphenyl, butylphenyl, propyldiphenyl, or cyclohexylphenyl. Most preferably, each of R¹ and R³ is methyl.

Preferably, X represents methylene, cyclohexyl-methylene, 2-[2.2.1]-bicycloheptylidene, ethylidene, isopropylidene, neopentylidene, cyclohexylidene, cyclopentadecylidene, cyclododecylidene, or adamantylidene. Still preferably, X represents a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl, preferably hydrogen or C₁-C₁₂-alkyl. Still more preferably, R^{c} and R^{d} are each independently hydrogen or C₁-C₆ alkyl. Most preferably, R^{c} is hydrogen and R^{d} is methyl, ethyl, propyl or butyl. At the same time, most preferably each of R¹ and R³ is methyl.

Preferably, each of R² and R⁴ independently represents a hydrogen atom, an alkoxy group, or a monovalent hydrocarbon group, preferably a hydrogen atom, C₁-C₆-alkoxy or C₁-C₆-alkyl, even more preferably a hydrogen atom or C₁-C₄-alkyl.

Preferably each of p and q is 1. However, in this case it is most preferred that R² and R⁴ are both hydrogen atoms.

Preferably, each X in formula (1) independently represents a C₁-C₆-alkylidene of the formula -C(R^{c})(R^{d})- wherein R^{c} and R^{d} are each independently hydrogen or C₁-C₅-alkyl.

Still preferably, in formula (1) each X independently represents a C₁-C₄-alkylidene of the formula -C(R^{c})(R^{d})- wherein R^{c} and R^{d} are each independently hydrogen or C₁-C₃-alkyl, each of R¹ and R³ independently represents methyl or ethyl, each of R² and R⁴ independently represents a hydrogen atom, methyl, ethyl or propyl and n represents the average number of repeating units.

Formula (1) recites "n" as number of repeating units. Preferably, if the polycarbonate of the present invention is a homopolycarbonate n is 30 to 80, more preferably it is 35 to 75, even more preferably it is 40 to 70, still more preferably it is 45 to 65 and most preferably it is 50 to 60. A homopolycarbonate according to the present invention is a polymer which has repeating units only of one type of formula (1). This does not mean that such a homopolymer cannot comprise any terminal groups or any other structures which are due to impurities or the like. However, such a homopolymer essentially consist of structures of formula (1) and furthermore, only one type of repeating unit of formula (1). If more than one type of repeating unit of formula (1) is present, the resulting polymer according to the present invention is a copolycarbonate. In this case the "n" in formula (1) might be different from the values as given above. In case the copolycarbonate comprises more than one type of structure of formula (1) the n in formula (1) might have the values as given above. In case, the copolycarbonate has a different co-monomer than a structure of formula (1), the values of n might be lower than the above-given values. In any case, the skilled person is capable of calculating "n" in formula (1) based on the number average molecular weight which is defined according to the present invention.

According to the present invention, the polycarbonate has a number average molecular weight of 8 000 g/mol to 20 000 g/mol, preferably 8 500 g/mol to 17 000 g/mol and more preferably 9000 g/mol to 15000 g/mol as determined *via* gel permeation chromatography in dichloromethane using a bisphenol A-polycarbonate calibration. Preferably, this gel permeation chromatography is calibrated using a bisphenol A polycarbonate and dichloromethane as eluent. Typically, linear polycarbonate (obtained from BPA and phosgene) having a known molecular weight distribution of PSS Polymer Standards Service GmbH, Deutschland can be used for the calibration. Most preferably, the calibration is performed according to method 2301-0257502-09D method (from 2009 in German) from the company Currenta GmbH & Co. OHG, Leverkusen. The eluent is dichloromethane. Preferably, a combination of columns based on crosslinked styrene divinylbenzene resins is used. Still preferably, the diameter of the analytical columns is 7.5 mm, length of 300 mm. The particle size of the column material is preferably 3 µm to 20 µm. The concentration of the solution is preferably 0.2 wt.-%. The flow rate is preferably 1.0 ml/min. The temperature of the solution is preferably 30 °C. Preferably, a UV- and/or RI-detection is/are used.

The number average molecular weight as defined according to the present invention ensures that the resulting polycarbonate exhibits good mechanical properties in terms of tensile strength and processing parameters. It has been surprisingly found that the resulting tensile strength is comparable to the tensile strength of bisphenol A based polycarbonate having a comparable number average molecular weight.

In particular the polycarbonate of the present invention has a glass transition temperature above 100 °C, preferably above 110 °C and more preferably above 116 °C. This glass transition temperature ensures that the polycarbonate of the present invention is useful for all applications for which also bisphenol A-based polycarbonates are used. Preferably, the glass transition temperature can be determined by differential scanning calorimetry ISO 11357-2:2013-05 at a heating rate of 10 °C/min.

Moreover, the saponifiable chlorine content of the polycarbonate according to the present invention is 0.2 ppm to 19 ppm, preferably 0.4 ppm to 15 ppm, more preferably 0.5 ppm to 10 ppm, still more preferably 0.8 ppm to 8 ppm and most preferably 1 ppm to 7.5 ppm with respect to the mass of the polycarbonate. According to the present invention ppm refer to weight parts if not indicated differently. The skilled person knows the "saponifiable chlorine content". Preferably, the chloride which forms the saponifiable chlorine is covalently bound to the polycarbonate. The skilled person knows how to determine the saponifiable chlorine content. Preferably, the saponifiable chlorine content is be determined with UV absorption after reaction with 4-(4-nitrobenzyl)pyridine. The chlorine end groups react with 4-(4-nitrobenzyl)pyridine and the UV absorption of the reaction product can be measured. Due to the reaction a methine dye is formed. The intensity of this complex can be transferred into a concentration of the saponifiable chlorine content of the polycarbonate. Such a calibration is known to the skilled person. Preferably, the polycarbonate is dissolved in dichloromethane and the absorption of the methine dye is measured at 438 nm.

The saponifiable chlorine content according to the present invention leads to the fact that the inventive polycarbonate has a low tendency to yellow. Moreover, the polycarbonate itself is not corrosive and therefore can be handled in pipes and reactors in an industrial scale.

Preferably, the polycarbonate of the present invention is characterized in that the polycarbonate additionally comprises at least one structural unit selected from the group of structural units of formula (2) to (10), (IIa), (IIb), (IIc), (IId), (IIe) and (IIf) 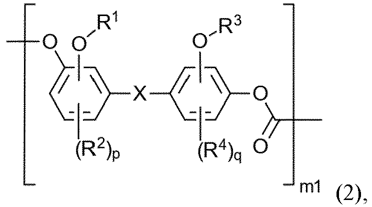
wherein X, R² to R⁴, p and q are as defined for formula (1), and m1 represents the average number of repeating units; 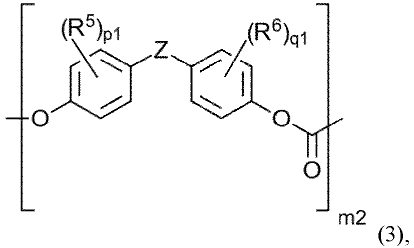
wherein each Z independently represents a single bond, -S(=O)₂-, -C(=O)-, -O-, -S-, - S(=O)-, -CH(CN)-, linear or branched C₁-C₆-alkylene which optionally comprises at least one carbonyl-group, optionally comprises at least one halogen atom and/or optionally is interrupted by at least one heteroatom, C₂-C₁₀-alkylidene which optionally comprises at least one carbon-carbon-double bond, optionally comprises at least one carbonyl-group and/or optionally comprises at least one halogen atom, C₅-C₁₂-cycloalkylene, wherein the cycloaliphatic group is fused to at least one further cycloaliphatic ring, C₅-C₁₅-cycloalkylidene wherein the cycloaliphatic group is optionally fused to at least one cycloaliphatic and /or at least one aromatic ring, C₇-C₂₀-aralkylidene, C₈-C₂₀-aralkylene, C₆-C₁₂-arylene optionally being fused to further aromatic rings which optionally may comprise at least one hetero atom, formula (B1-A), formula (B1-B), formula (B1-C) or formula (B1-D) 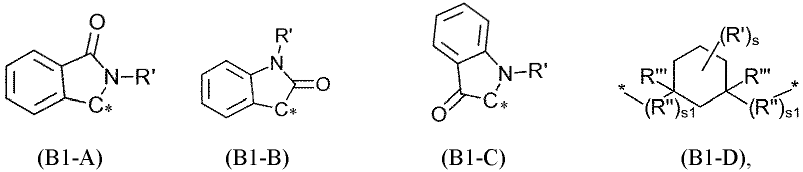
wherein in formulae (B1-A), (B1-B) and (B1-C) each R' independently represents a linear C₁-C₄-alkyl, branched C₃-C₄-alkyl, aralkyl or aryl and the "C*" indicates the quaternary carbon atom which is at the position indicated as "Z" in formula (3), and wherein in formula (B1-D) each R' independently represents a linear C₁-C₄-alkyl, branched C₃-C₄-alkyl, each R" independently represents a linear C₁-C₄-alkylene, branched C₃-C₄-alkylene, each R‴ independently represents H or linear C₁-C₃-alkyl, s is 0 to 2 and each s1 independently is 0 or 1, and the "*" indicate the bonds which link "Z" to the aromatic rings in formula (3),
each R⁵ and R⁶ independently represents H, C₁-C₁₈-alkyl, C₅-C₆-cycloalkyl, C₁-C₅- alkenyl-, C₁-C₁₈-alkoxy, phenoxy, halogen atom, C₆-C₁₈-aryl or C₇-C₁₈-aralkyl,
each of p1 and q1 is 1 to 4 and
m2 represents the average number of repeating units; 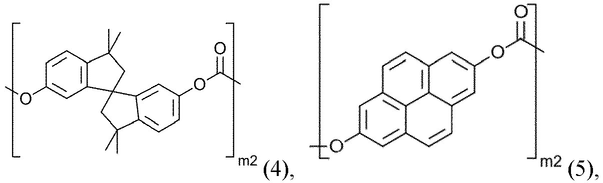 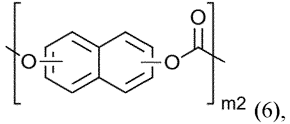
wherein in formula (4) to (6) m2 represents the average number of repeating units; 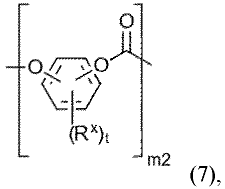
wherein each R^{x} independently represents linear or branched C₁-C₆-alkyl, C₁-C₁₂-aryl, C₁-C₈-aralkyl or a halogen atom, t is 0 to 4 and m2 represents the average number of repeating units; 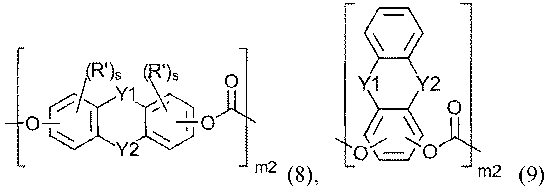
wherein in formula (8) and (9) each Y1 independently represents oxygen, sulfur or N-R^{y}, wherein R^{y} is H or -CH₃, each Y2 interpedently represents a single bond, oxygen, sulfur or N-R^{y} as defined above and m2 represents the average number of repeating units and in formula (8) each R' independently represents a linear C₁-C₄-alkyl, branched C₃-C₄ alkyl, aralkyl or aryl and s is 0 to 2; 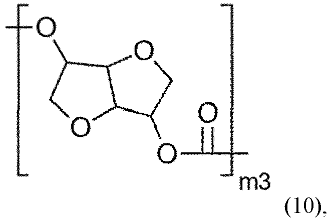
wherein m3 represents the average number of repeating units; 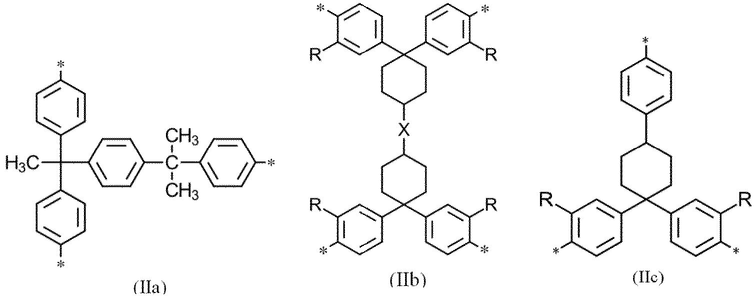 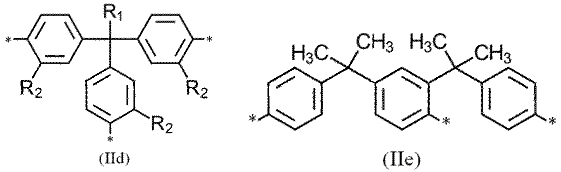 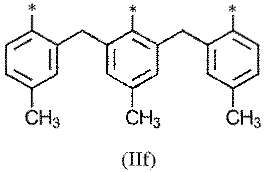
wherein the "*" represents the connection of the cross-linking point to the polycarbonate polymer chain and wherein
R in formula (IIb) and (IIc) is independently selected from the group consisting of H and alkyl, preferably H and methyl,
X in formula (IIb) is selected from the group consisting of linear or branched alkyl and a single bond, preferably C(CH₃)₂ and a single bond,
R₁ in formula (IId) is selected from the group consisting of H and alkyl, preferably H and methyl, and
R₂ in formula (IId) is independently selected from the group consisting of H and alkyl, preferably H and methyl.

The resulting polycarbonate is a copolycarbonate according to the present invention. The skilled person understands that there might be an overlap between the structure of chemical formula (1) and (3). However, according to the present invention in this preferred embodiment the term "the polycarbonate additionally comprises at least one structural unit of formula (3)" preferably is to be understood that the structure of formula (1) needs to be mandatorily different than the structure of formula (3). Only by this a copolycarbonate comprising two different structural units results.

Preferably, the (co)polycarbonate of the present invention does not comprise a structural unit of formula (100) 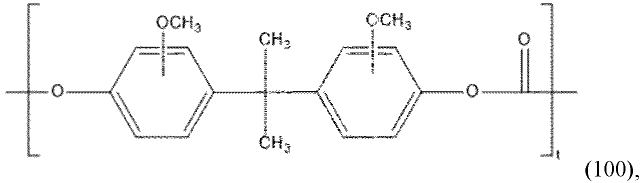 wherein t represents the number of repeating units and is preferably 1 to 80, more preferably it is 2 to 75, even more preferably it is 40 to 70, still more preferably it is 45 to 65 and most preferably it is 50 to 60. This however, does preferably not exclude that the structural unit of formula (100) might be present in the polycarbonate of the present invention in trace amounts. Preferably, the amount of structural unit of formula (100) in the polycarbonate of the present invention is less than 30 wt.-%, still preferably less than 20 wt.-%, most preferably less than 10 wt.%, wherein the wt.-% is based on the total weight of the polycarbonate.

Preferably, the polycarbonate of the present invention additionally comprises at least one structural unit selected from the group of structural units of formula (3), (4) and (7),
wherein in formula (3) each Z independently represents a single bond, -S(=O)₂-, -C(=O)-, -O-, -S-, -S(=O)-, linear or branched C₁-C₆-alkylene, C₂-C₁₀-alkylidene which optionally comprises at least one carbon-carbon-double bond, C₅-C₁₅-cycloalkylidene wherein the cycloaliphatic group is optionally fused to at least cycloaliphatic and /or at least one aromatic ring, C₇-C₁₅-aralkylidene, the C₈-C₁₅-aralkylene of formula (B1-E) 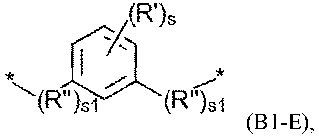
wherein in formula (B1-E) each R' independently represents a linear C₁-C₄-alkyl, branched C₃-C₄ alkyl, each R" independently represents a linear C₁-C₄-alkylene, branched C₃-C₄ alkyl, s is 0 to 2 and each s1 independently is 0 or 1, and the "*" indicate the bonds which link "Z" to the aromatic rings in formula (3),
formula (B1-A), formula (B1-B), formula (B1-C),
each R⁵ and R⁶ independently represents H, C₁-C₁₈-alkyl, C₅-C₆-cycloalkyl, C₁-C₁₈-alkoxy, phenoxy, C₆-C₁₈-aryl or C₇-C₁₈-aralkyl,
each of p1 and q1 is 1 to 4 and m2 represents the average number of repeating units.

Still preferably, the polycarbonate of the present invention additionally comprises at least one structural unit selected from the group of structural units of formula (3), wherein each Z independently represents a single bond, C₂-C₆-alkylidene, C₅-C₁₂-cycloalkylidene wherein the cycloaliphatic group is optionally fused to at least one aromatic ring,
formula (B1-A), formula (B1-B), formula (B1-C),
each R⁵ and R⁶ independently represents H, C₁-C₃-alkyl, C₁-C₁₈-alkoxy,
each of p1 and q1 is 1 to 4 and m2 represents the average number of repeating units.

Most preferably, the polycarbonate of the present invention additionally comprises at least one structural unit selected from the group of structural units of formula (3a) to (3k) 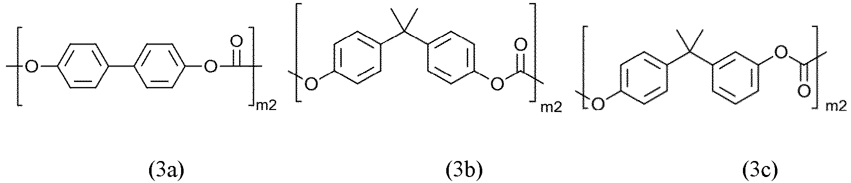 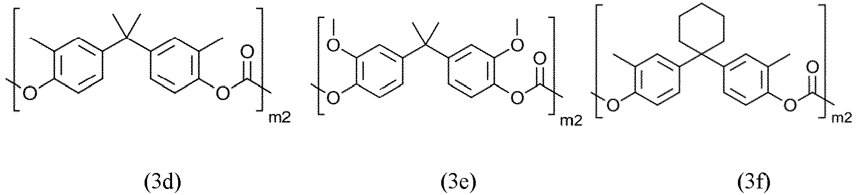 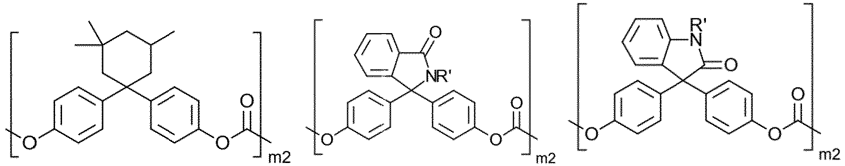 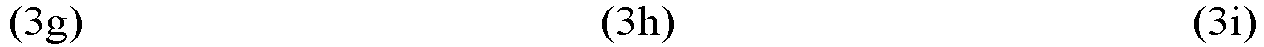 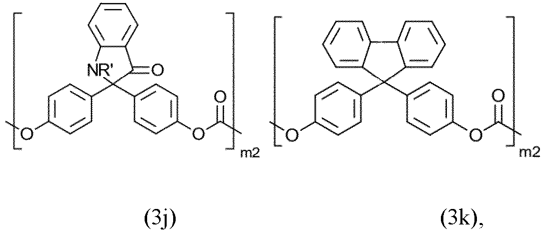 wherein in formulae (3h), (3i) and (3j) R' represents methyl or phenyl.

Most preferably, the polycarbonate of the present invention additionally comprises a structural unit of formula (3b) or (3g).

Still most preferably, the polycarbonate of the present invention additionally comprises at least one structural unit of formula (2) and at least one structural unit of formula (3) to (10), (IIa), (IIb), (IIc), (IId), (IIe) and (IIf). All preferences as given above for the respective formula apply to this preference, too. Still more preferably, the polycarbonate of the present invention additionally comprises at least one structural unit of formula (2) and at least one structural unit of formula (3), (10) and (IId). Still most preferably, in this case formula (3) is represented by formula (3b) and/or (3g).

"Alkyl" in the context of the present invention, for example and if not mentioned differently, refers to an alkane structure of which one hydrogen atom is removed. The "alkyl" of the present invention which can be linear or branched is saturated and therefore, it comprises only single bonds between adjacent carbon atoms. Preferably, alkyl groups according to the present invention comprise methyl, ethyl, *n*-propyl, isopropyl, *n*-butyl, *sec*-butyl, *tert*-butyl, *n*-pentyl, 1-methylbutyl, 2-methylbutyl, 3-methylbutyl, neopentyl, 1-ethylpropyl, *n*-hexyl, 1,1-dimethylpropyl, 1,2-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl, 1-ethyl-2-methylpropyl and the like. These structures can be limited in choice, in case the invention defines the carbon atoms of an alkyl group in a different manner.

"Alkylene" in the context of the present invention, for example and if not mentioned differently, refers to a bridging alkane structure of which two hydrogen atoms from different carbon atoms are removed. In this context the two carbon atoms of which the two hydrogens atoms are removed can be removed from any carbon atom which is present in the alkane structure. This means that the two carbon atoms can, but not necessarily must be, adjacent to each other. An alkylene structure can be linear or branched and is saturated. In case the alkylene group comprises only one carbon atom, the alkylene group is a methylene group (-CH₂-) which is connected to the rest of the molecule by two single bonds. Preferably, alkylene groups according to the present invention comprise methylene, ethylene, n-propylene, isopropylene, n-butylene, sec-butylene, tert-butylene, n-pentylene, 1-methylbutylene, 2-methylbutylene, 3-methylbutylene, neopentylene, 1-ethylpropylene, n-hexylene, 1,1-dimethylpropylene, 1,2-dimethylpropylene, 1,2-dimethylpropylene, 1-methylpentylene, 2-methylpentylene, 3-methylpentylne, 4-methylpentylene, 1,1-dimethylbutylene, 1,2-dimethylbutylene, 1,3-dimethylbutylene, 2,2-dimethylbutylene, 2,3-dimethylbutylene, 3,3-dimethylbutylene, 1-ethylbutylene, 2-ethylbutylene, 1,1,2-trimethylpropylene, 1,2,2-trimethylpropylene, 1-ethyl-1-methylpropylene, 1-ethyl-2-methylpropylene, 1-ethyl-2-methylpropylene and the like. These structures can be limited in choice, in case the invention defines the carbon atoms of an alkylene group in a different manner. Moreover, the alkylene group according to the present invention optionally comprises at least one carbonyl-group, optionally comprises at least one halogen atom and/or optionally is interrupted by at least one heteroatom. Examples for such alkylene groups are -C(=O)-(CH₂)₄-C(=O)-, -C(=O)-(CH₂)₃-C(=O)-, -C(=O)-(CH₂)₂-C(=O)-, -C(CF₃)₂, -O-(CH₂)₄-O-, -O-(CH₂)₃-O-, -O-(CH₂)₂-O- or the like.

"Alkylidene" in the context of the present invention, for example and if not mentioned differently, refers to a bridging alkane structure of which two hydrogen atoms from the same carbon atom are removed. The alkylidene group optionally comprises at least one carbon-carbon-double bond, optionally comprises at least one carbonyl-group and/or optionally comprises at least one halogen atom. Preferably, alkylidene groups according to the present invention and/or in context with formula (3) comprise CH₂=C*, C(CH₃)₂=C*, isopropylidene, n-propylidene, isoheptylidene, C*(CH₃)(C(=O)CH₃), C(Ch)=C*, C(Br₂)=C* or the like, wherein the "C*" indicates the carbon atom which is at the position indicated as "Z" in formula (3).

"Cycloalkylene" in the context of the present invention, for example and if not mentioned differently, refers to a bridging cycloalkane structure of which two hydrogen atoms from different carbon atoms in the ring are removed. In this context the two carbon atoms of which the two hydrogens atoms are removed can be removed from any carbon atom which is present in the cycloalkane structure. This means that the two carbon atoms can, but not necessarily must be, adjacent to each other. According to the present invention the cycloaliphatic group of the cycloalkylene group is fused to at least one further cycloaliphatic ring. Examples of such a cycloalkylene group is the adamantanylene (tricyclo [3.3. 1.1 3,7 ] decanediyl).

"Cycloalkylidene" in the context of the present invention, for example and if not mentioned differently, refers to a bridging cycloalkane structure of which two hydrogen atoms from the same carbon atom in the ring are removed. The cycloaliphatic group of the cycloalkylidene group is optionally fused to at least cycloaliphatic and /or at least one aromatic ring. Examples of such cycloalkylidene groups are cyclopentylidene, cyclohexylidene, 3,3,5-trimethylcyclohexylidene, cyclodecylidene, cyclododecylidene, tetrahydrodicyclopentylidene, 9-fluorenylidene or the like.

"Aralkylidene" in the context of the present invention, for example and if not mentioned differently, refers in each case independently to a bridging straight-chain, cyclic, branched or unbranched alkyl structure of which two hydrogen atoms from the same carbon atom are removed and which is singly, multiply or polysubstituted by aryl radicals. **In** parallel, "aralkylene" refers in each case independently to a bridging straight-chain, cyclic, branched or unbranched alkyl structure of which two hydrogen atoms from the different carbon atoms are removed and which is singly, multiply or polysubstituted by aryl radicals. "Aryl" in the context of the present invention, for example and if not mentioned differently, is a carbocyclic aromatic radical. Examples of "aryl" are phenyl, *o-, p-, m*-tolyl, naphthyl, phenanthryl or anthracenyl. Examples of such aralkylidene groups especially in the context of formula (3) are phenyl-CH*, phenyl-C*(CH₃), naphthyl-CH*, phenyl-C*-phenyl or the like, wherein the "C*" indicates the carbon atom which is at the position indicated as "Z" in formula (3). Examples of such aralkylene groups are m-diisopropylidene phenylene, p-diisopropylidene phenylene.

"Arylalkyl" in the context of the present invention, for example and if not mentioned differently, can be an aryl group as defined above having an alkyl, alkynyl, or alkenyl group attached to the aromatic group.

"Alkoxy" in the context of the invention, for example and if not mentioned differently, refers to a linear, cyclic or branched alkyl group singularly bonded to oxygen (-OR). Preferably, alkoxy groups according to the present invention have 1 to 6 carbon atoms and, thus, comprise methoxy, ethoxy, *n*-propoxy, isopropoxy, *n*-butoxy, *sec*-butoxy, *tert*-butoxy, *n*-pentoxy, **1-**methylbutoxy, 2-methylbutoxy, 3-methylbutoxy, neopentoxy, 1-ethylpropoxy, cyclohexoxy, cyclopentoxy, n-hexoxy, 1,1-dimethylpropoxy, 1,2-dimethylpropoxy, 1,2-dimethylpropoxy, 1-methylpentoxy, 2-methylpentoxy, 3-methylpentoxy, 4-methylpentoxy, 1,1-dimethylbutoxy, 1,2-dimethylbutoxy, 1,3-dimethylbutoxy, 2,2-dimethylbutoxy, 2,3-dimethylbutoxy, 3,3-dimethylbutoxy, 1-ethylbutoxy, 2-ethylbutoxy, 1,1,2-trimethylpropoxy, 1,2,2-trimethylpropoxy, 1-ethyl-1-methylpropoxy, 1-ethyl-2-methylpropoxy or 1-ethyl-2-methylpropoxy. These structures can be limited in choice, in case the invention defines the carbon atoms of an alkoxy group in a different manner.

A "halogen atom" in the context of the invention, if not mentioned differently, refers to fluorine (F), chlorine (Cl), bromine (Br), or iodine (I). Preferably, a halogen atom is F, Cl, Br or I, more preferably it is Cl or Br.

Based on the above-given definitions the skilled person knows how to understand further definitions which are not explicitly defined in the passage above.

The term "average number of repeating units" is known by the skilled person. The skilled person knows how to determine this parameter. Typically, it is determined by using a GPC method. Preferably, it is determined using the GPC method as outlined in the context of the present invention.

More preferably, the polycarbonate of the present invention is characterized in that the polycarbonate additionally comprises at least one structural unit selected from the group of structural units of formula (2), (3) and (IId)
wherein in formula (2) X independently represents a C₁-C₄-alkylidene of the formula - C(R^{c})(R^{d})-, wherein R^{c} and R^{d} are each independently hydrogen or C₁-C₃-alkyl, each of R¹ and R³ independently represents methyl or ethyl, each of R² and R⁴ independently represents a hydrogen atom, methyl, ethyl or propyl and m1 represents the average number of repeating units,
in formula (3) Z independently represents a single bond, C₂-C₅-alkylidene or C₅-C₁₂-cycloalkylidene, preferably a single bond, isopropylidene or 3,3,5-trimethylcyclohexylidene and
in formula (IId) each R¹ and R² independently is selected from the group consisting of H and alkyl, preferably H and methyl. The presence of co-monomers is useful for effectively and fine tuning the resulting properties of the copolycarbonate. For example the glass transition temperature or mechanical properties of the polycarbonate can be influenced by the presence of a specific comonomer.

Preferably, the polycarbonate of the present invention comprises at least 30 wt.-%, more preferably at least 40 wt-%, still more preferably at least 50 wt.-%, still more preferably at least 60 wt.-%, still more preferably at least 70 wt.-%, still more preferably at least 80 wt.-% and most preferably at least 90 wt.-% of the structure of formula (1), wherein the wt.-% is based on the total weight of the polycarbonate. Still preferably, the polycarbonate comprises at least 30 wt.-%, more preferably at least 40 wt-%, still more preferably at least 50 wt.-%, still more preferably at least 60 wt.-%, still more preferably at least 70 wt.-% , still more preferably at least 80 wt.-% and most preferably at least 90 wt.-% of the sum of the structure of formula (1), (2), (3), (4), (IIa), (IIb), (IIc), (IId), (IIe) and (IIf), wherein the wt.-% is based on the total weight of the polycarbonate. Most preferably, the polycarbonate essentially consists of or consists of the structure of formula (1). Still most preferably, the polycarbonate essentially consists of or consists of the structure of formula (1) and at least one further structure selected from the group consisting of the structure of formula (2), (3), (4), (IIa), (IIb), (IIc), (IId), (IIe) and (IIf). It is clear that the term "consists of" in this case excludes the terminal groups which are additionally present.

In case the polycarbonate of the present invention additionally comprises at least one structural unit selected from the group of structural units of formula (2), (3) and/or (4), it is preferred that the molar ratio of the structural units of formula (1) to the structural units of formula (2), (3) and/or (4) (whichever is present) is from 20:80 to 80:20, more preferably 30:70 to 70:30 and most preferably 35:65 to 65:35. In case the polycarbonate of the present invention additionally comprises at least one structural unit selected from the group of structural units of formula (IIa), (IIb), (IIc), (IId), (IIe) and/or (IIf), it is preferred that the polycarbonate comprises 0.1 to 5 mol%, more preferably 0.5 to 3 mol-% and most preferably 1.0 to 1.5 mol-% of the structural units selected from the group of structural units of formula (IIa), (IIb), (IIc), (IId), (IIe) and/or (IIf) (whichever is present).

Preferably, the polycarbonate of the present invention is characterized in that the at least one aromatic group that terminates the polycarbonate chains and which can be optionally terminated, preferably substituted with at least one C₁-C₆ alkyl group is selected from the group consisting of formulae (5a), (6a), (7a), (8a) and (9a), wherein 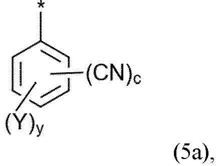
wherein each Y independently represents a halogen atom, C₁-C₃-alkyl, C₁-C₃-alkoxy, C₇-C₁₂-arylalkyl, C₇-C₁₂-alkylaryl or a nitro group,
y is 0 to 4, and c is 1 to 5, with the proviso that y+c is 1 to 5, 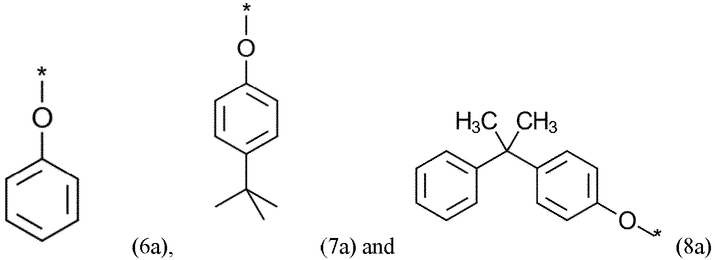
and each "*" indicates the position, which links the structure of formula (5a), (6a), (7a) or (8a) to the polycarbonate. Most preferably, the polycarbonate of the present invention is characterized in that the polycarbonate chains comprise terminal groups of formula (7a).

According to the present invention the saponifiable chlorine content is very low. This is due to the fact that the polymerization reaction has a very high conversion. In addition, this is influenced by the fact that during the polymerization a chain terminator is used resulting in polycarbonate chains that are terminated with at least one aromatic group which can be optionally terminated, preferably substituted with at least one C₁-C₆ alkyl group. According to the present invention the correct process parameters were found so that the chain terminator indeed reacts with the polycarbonate chain ends. The skilled person knows that not every polycarbonate chain is terminated with an aromatic group (especially the above-mentioned preferred groups). This can be already seen by the fact that the saponifiable chlorine content is not zero. Moreover, it is possible that some polycarbonate chains are terminated with OH. The present invention preferably encompasses cases in which not all of the resulting polymer chains are terminated with the at least one aromatic group which can be optionally terminated, preferably substituted with at least one C₁-C₆ alkyl group. However, it is preferred to have at least 50 mol-%, more preferably at least 75 mol-% and most preferably at least 90 mol-% of the polymer chains terminated with the at least one aromatic group which can be optionally terminated, preferably substituted with at least one C₁-C₆ alkyl group (wherein the mol-% refer to mol of all polymer chains). It is beneficial to use chain terminators during the process for preparing the inventive polycarbonate in order to terminate the chains with other groups than chlorine atoms, more preferably with other groups than chlorine atoms or OH groups. However, as can be seen from the experiments only with the process according to the present invention, the chain terminators indeed react with the chain ends.

Moreover, it is preferred that the polycarbonate of the present invention has 0.5 to 10 wt.-%, more preferably 1 to 5 wt.-% of aromatic terminal groups with respect to the total weight of the polycarbonate.

Finally, the use of the chain terminator results in polycarbonate chains which have a low content of terminal -OH groups. Preferably, the polycarbonate of the present invention has a terminal -OH group content of not higher than 1000 ppm, still preferably lower than 500 ppm and most preferably less than 100 ppm. The skilled person knows how to determine the content of terminal -OH groups. For example, IR spectroscopy or ¹H-NMR can be used. According to the present invention, preferably the terminal -OH group content is determined by IR spectroscopy. The polycarbonate is dissolved, preferably in dichloromethane. The band at 3583 cm⁻¹ is preferably used to determine the content. The skilled person is able to perform a respective calibration. In a further aspect of the present invention a molding compound comprising the polycarbonate of the present invention in each definition as given above is provided. By addition of further thermoplastic polymers and/or additive such molding compounds can be obtained. Furthermore, another aspect of the present invention provides a molded article comprising the polycarbonate of the present invention in each definition as given above. Such molded articles can be obtained by process known to the skilled person such as extrusion, injection molding, blow molding or thermoforming of sheets or plates.

In another aspect of the present invention a process is provided which results in a polycarbonate with a low saponifiable chlorine content and a high number average molecular weight. Preferably, the process of the present invention results in the polycarbonate of the present invention in each definition as given above.

Accordingly, a process for preparing a polycarbonate is provided, the polycarbonate preferably comprising at least 30 wt-% of structural units of formula (1), wherein the wt.-% is based on the total weight of the polycarbonate, 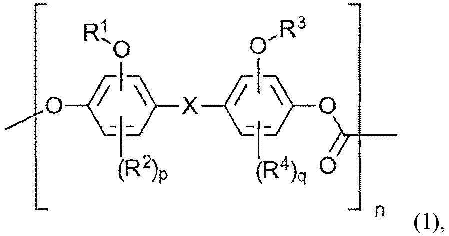 wherein in formula (1)
each X independently represents a single bond, -O-, -S-, -S(O)-, -S(O)₂-, -C(O)-, or an organic group having 1 to 18 carbon atoms, wherein the organic group having 1 to 18 carbon atoms can be linear, branched or cyclic, aromatic or non-aromatic, and can further comprise heteroatoms such as halogens, oxygen, nitrogen, sulfur, silicon or phosphorous,
each of R¹ and R³ independently represents a monovalent hydrocarbon group, preferably C₁-C₂₆-alkyl, C₇-C₂₆ alkylaryl or C₇-C₂₆-aralkyl,
each of R² and R⁴ independently represents a hydrogen atom, an alkoxy group, or a monovalent hydrocarbon group, preferably a hydrogen atom, C₁-C₆-alkoxy or C₁-C₆-alkyl, and
each of p and q independently is 1 or 2, preferably 1 and
n represents the average number of repeating units,

wherein the process comprises
   (a) dissolving at least one diol of formula (I) in an aqueous alkali solution 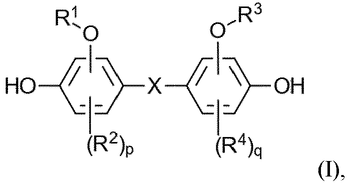 wherein in formula (I),
      each X independently represents a single bond, -O-, -S-, -S(O)-, -S(O)₂-, -C(O)-, or an organic group having 1 to 18 carbon atoms, wherein the organic group having 1 to 18 carbon atoms can be linear, branched or cyclic, aromatic or non-aromatic, and can further comprise heteroatoms such as halogens, oxygen, nitrogen, sulfur silicon or phosphorous,
      each of R¹ and R³ independently represents a monovalent hydrocarbon group, preferably C₁-C₂₆-alkyl, C₇-C₂₆ alkylaryl or C₇-C₂₆-aralkyl,
      each of R² and R⁴ independently represents a hydrogen atom, an alkoxy group, or a monovalent hydrocarbon group, preferably a hydrogen atom, C₁-C₆-alkoxy or C₁-C₆-alkyl, and
      each of p and q independently is 1 or 2, preferably 1 and
      optionally adding at least one chain terminator,
      optionally adding at least one catalyst and
      optionally adding additional aqueous alkali solution,
      to result in a solution,
   (b) adding an organic solvent suitable for dissolving polycarbonate to the solution of step (a) and thereby obtaining a mixture,
   (c) adding phosgene to the mixture of step (b) and optionally adding additional aqueous alkali solution,
   (d) reacting the mixture of step (c) for 2 to 30 minutes, preferably 2 to number of re minutes, most preferably 2 to 5 minutes,
   (e) optionally adding at least one chain terminator to the mixture of step (d) with the proviso that in case in step (a) no chain terminator was added, the addition of at least one chain terminator in step (e) is mandatory and
      optionally adding at least one catalyst,
      optionally adding additional aqueous alkali solution,
      and in case at least one chain terminator and/or at least one catalyst is added in this step reacting the resulting mixture for 2 to 60 minutes, preferably 2 to 20 minutes, most preferably 2 to 5 minutes,
   (f) optionally adding at least one catalyst to the mixture of step (d) or step (e), whichever step is carried out last, with the proviso that in case neither in step (a) nor in step (e) a catalyst was added, the addition of at least one catalyst in step (f) is mandatory,
      and in case at least one catalyst is added in this step reacting the resulting mixture for 2 to 60 minutes, preferably 10 to 50 minutes, more preferably 15 to 45 minutes, most preferably 25 to 35 minutes,
   (g) determine the pH of the mixture obtained after step (d), (e) or (f), whichever step is carried out last, and if required adjusting the pH by the addition of additional aqueous alkali solution so that the resulting pH is at least 10.0,
and in case additional aqueous alkali solution is added in this step reacting the mixture for 2 to 30 minutes, preferably 2 to 20 minutes, most preferably 2 to 5 minutes.

In the context of the invention aqueous alkali solution is preferably to be understood as aqueous alkali metal hydroxide solution and preferably means aqueous sodium hydroxide solution, potassium hydroxide solution or mixtures thereof, particularly preferably aqueous sodium hydroxide solution. Preferably, the aqueous alkali solution has a pH of equal to or higher than 10.0, preferably of equal to or higher than 10.5, still preferably equal to or higher than 10.7, most preferably equal to or higher than 10.8.

According to the present invention, the pH is determined during the process. Preferably, the term "determined" according to the present invention either means (actively) measured and/or calculated (e. g. based on the molar ratios of the educts and/or the reaction itself). In case the pH is measured, it is either measured at room temperature or at the state, the solution which is measured, has at this moment - if not indicated differently. Due to exothermic reactions it is possible that the solution which is measured has a higher temperature than room temperature.

Preferably, with respect to the diol of formula (I)

each X independently represents a substituted or unsubstituted C₃-C₁₈-cycloalkylidene; a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula -C(=R^{c})- wherein R^{c} is a divalent C₁ -C₁₂-hydrocarbon group,
each of R¹ and R³ independently represents C₁-C₂₆-alkyl, C₇-C₂₆ alkylaryl or C₇-C₂₆-aralkyl,
each of R² and R⁴ independently represents a hydrogen atom, C₁-C₆-alkoxy or C₁-C₆-alkyl, and
each of p and q independently is 1. It is understood that the skilled person sees that formula (1) and formula (I) differ from each other in that in formula (1) the OH groups of formula (I) reacted to form a carbonate. Therefore, it is also understood that the skilled person can transfer all preferred definitions of X, R¹ to R⁴, p and q as given with respect to formula (1) to formula (I). Thus, all preferences as given with respect to formula (1) are also valid for formula (I). Moreover, it is understood that if the polycarbonate is to comprise a specific structural formula (1), the respective diol of formula (I) needs to be the same one, but having additionally OH groups.

Preferably, the polycarbonate as obtained by the process of the present invention comprises at least 30 wt.-%, more preferably at least 40 wt-%, still more preferably at least 50 wt.-%, still more preferably at least 60 wt.-%, still more preferably at least 70 wt.-%, still more preferably at least 80 wt.-% and most preferably at least 90 wt.-% of the structure of formula (1), wherein the wt.-% is based on the total weight of the polycarbonate. Moreover, preferably it is understood that after the last process step according to the present invention( e. g. process step (g)) a polycarbonate is obtained that comprises at least 30 wt.-%, more preferably at least 40 wt-%, still more preferably at least 50 wt.-%, still more preferably at least 60 wt.-%, still more preferably at least 70 wt.-%, still more preferably at least 80 wt.-% and most preferably at least 90 wt.-% of the structure of formula (1), wherein the wt.-% is based on the total weight of the polycarbonate. Furthermore, all preferences as given with respect to the polycarbonate according to the present invention preferably apply.

Moreover, the skilled person is aware of the fact that in principle the wt.-% of structural formula (1) in the resulting polycarbonate can be achieved by using respective amounts/ratios of the respective diol. This means, for example, if two diols are used, the resulting polycarbonate will comprise respective structural units in a comparable ratio as the two diols are initially applied.

This for example means that in process step (a) according to the present invention preferably at least 30 wt.-% of at least one diol of formula (I) are dissolved, wherein the wt.-% is based on the total weight of all diols and polyols used. Preferably, in process step (a) according to the present invention preferably at least 30 wt.-%, more preferably at least 40 wt-%, still more preferably at least 50 wt.-%, still more preferably at least 60 wt.-%, still more preferably at least 70 wt.-%, still more preferably at least 80 wt.-% and most preferably at least 90 wt.-% of at least one diol of formula (I) are dissolved.Preferably, in step (a) an additional diol and/or triol and/or tetraol different from that of formula (I) is used. Preferably, in step (a) of the process of the present invention an additional polyol selected from the group of structural units of formula (II) to (X), (IIg), (IIh), (IIi), (IIj), (IIk) and (III) is used, wherein 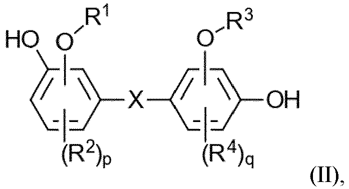 wherein in formula (II) X, R² to R⁴, p and q is as defined for formula (2), 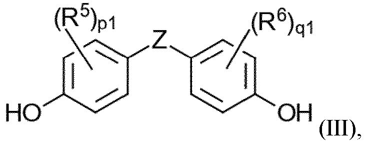 wherein in formula (III) each Z, R⁵, R⁶, p1 and q1 is as defined for formula (3), 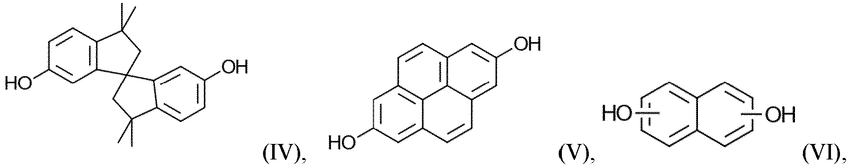 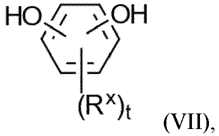 wherein in formula (VII) each R^{x} and each t is as defined for formula (7), 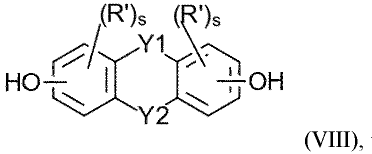 wherein in formula (VIII) each Y1, Y2, R' and s is as defined for formula (8), 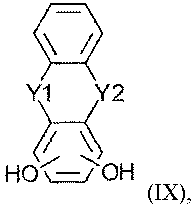 wherein in formula (IX) each Y1 and Y2 is as defined for formula (9), 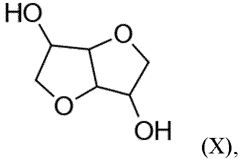 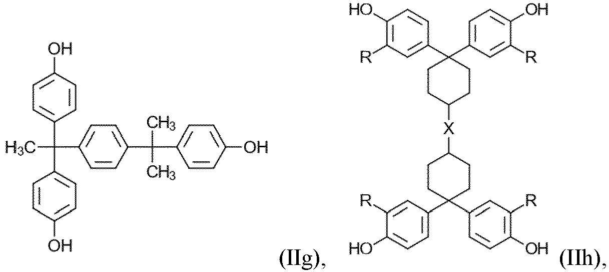 wherein each R and X is as defined for formula (IIb), 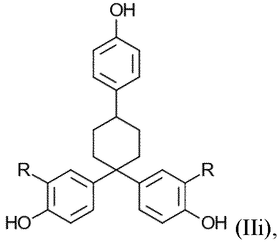 wherein each R is as defined for formula (IIc), 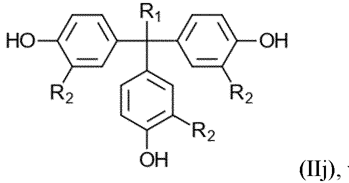 wherein each R¹ and R² is as defined for formula (IId),

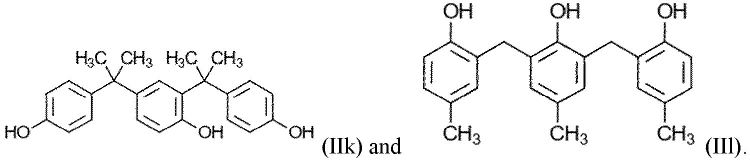

The person skilled in the art is able to see the relationship between the above mentioned polyols and the respective structures of formulae (2) to (10) and (IIa) to (IIf). Thus, he is also able to transfer all preference that are given with respect to the polycarbonate of the present invention to the polyols as shown above. Moreover, in the context of the present invention the term "polyol" or "additional polyol" preferably comprises diols, triols or tetraols. Sometimes reference is only made to diol or an additional diol. However, it is understood that also the triols and tetraols of formula (IIg) to (IIl) can be encompassed by this expression. This can be understood by the skilled person in the context of the present invention.

Preferably in the process of the present invention no diol of formula (101) is used

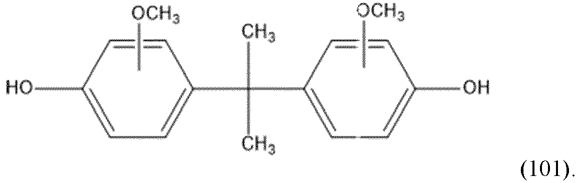

This preferably does not exclude that the structural unit of formula (101) might be present in the used diols or polyols in trace amounts. Preferably, the amount of the diol of formula (101) in the at least one diol and possible polyol which are used according to the present invention is less than 30 wt.-%, still preferably less than 20 wt.-%, most preferably less than 10 wt.%, wherein the wt.-% is based on the total weight of all diols and polyols as used.

The solution of step (a) contains aqueous alkali solution, one or more diols of formula (I) and water, wherein the concentration of this aqueous solution in terms of the sum of the diols present calculated not as alkali metal salts but rather as free diols is preferably between 1% and 30% by weight, particularly preferably between 3% and 25% by weight, very particularly preferably 15% to 18% by weight based on the total weight of the aqueous phase. The alkali metal hydroxide used to dissolve the diols, for example sodium or potassium hydroxide, may be used in solid form or as the corresponding aqueous alkali metal hydroxide solution. The concentration of the aqueous alkali solution is determined by the target concentration of the desired diol solution but is generally between 5% and 25% by weight, preferably 5% and 15% by weight, based on 100% by weight of aqueous alkali solution or is more concentrated and subsequently diluted with water. The process with subsequent dilution employs optionally temperature controlled aqueous alkali solutions having concentrations between 15% and 75% by weight, preferably 25% and 55% by weight. The alkali metal content depends on the structure of the diol(s). Preferably, the alkali metal content is adjusted so that the resulting pH of the solution of process step (a) is at least 12.0, more preferably at least 12.5 and most preferably at least 12.7. If more than one diol is used these may be dissolved together. This means that comonomers, especially those of formula (II) to (X) or (IIg) to (IIl) are preferably added at the same time as the diol of formula (I). In case a tri- or tetrafunctional compound / crosslinker (e. g. structures of formula (IIg) to (IIl)) is added this is preferably added at the same time as the diol of formula (I). This means that preferably all difunctional and if present tri- or tetrafunctional components are added at the same time in process step (a). However, since the solubility of diols and/or polyols depends very strongly on the employed alkali metal amount it may be advantageous to have not one solution comprising two diols but rather two solutions each comprising one diol dissolved in a suitable aqueous alkali solution which are then metered in separately so as to form the correct mixing ratio. The dissolution processes may proceed from solid diol(s), usually in flake or prill form, or else from molten diols. The employed aqueous alkali solution may, in the case of sodium hydroxide or aqueous sodium hydroxide solution, have been produced, for example, by the amalgam process or the so-called membrane process. Both methods have long been used and are familiar to those skilled in the art. In the case of aqueous sodium hydroxide solution it is preferable to use that produced by the membrane process.

In such an aqueous solution and/or the aqueous phase the diol(s) are completely or partially in the form of the corresponding alkali metal salts/dialkali metal salts.

According to the present invention process step (a) results in a solution. In the context of the present invention a "solution" differs especially from a "suspension" in that in a solution almost no solid particles can be detected. A solution is a single-phase system. The state with respect to phases can be determined by methods known by the skilled person. For example optical analysis such as refractive index can distinguish between a single-phase or two-phased system.

In step (a) the addition of at least one chain terminator, at least one catalyst and additional aqueous alkali solution is optional. Preferably, no chain terminator is added at process step (a). Still preferably, no catalyst is added at process step (a). More preferably, neither any chain terminator nor any catalyst is added at process step (a).

Preferably, the pH at the end of process step (a) is at least 12.0, more preferably at least 12.5 and most preferably at least 12.7. In case the pH is below this value at the end of process step (a) it is preferred to add additional aqueous alkali solution in order to adjust the pH so that it is at least 12.0, more preferably at least 12.5 and most preferably at least 12.7. In step (b) an organic solvent suitable for dissolving polycarbonate to the solution of step (a) is added and a mixture is obtained. In principle, this mixture of step (b) is a dispersion comprising the aqueous phase of step (a) and the organic phase (solvent) which is added in step (b).

Dispersion of the organic phase in the aqueous phase or the aqueous phase in the organic phase using for example a disperser may produce an oil-in-water (ow) dispersion or a water-in-oil dispersion (wo), wherein oil is understood as meaning the organic phase. However, it is preferable according to the invention that process step (b) produces an oil-in-water dispersion. The organic phase is preferably continuously dispersed during step (b) into the aqueous phase of step (a) using the disperser.

By definition an oil-in-water dispersion is one in which water forms the outer (continuous) phase and oil forms the inner (dispersed) phase, i.e. oil droplets are distributed in water. A water-in-oil dispersion is therefore one in which oil forms the outer phase and water forms the inner phase.

The organic solvent suitable for dissolving polycarbonate is known to the skilled person.

Suitable solvents are aromatic and/or aliphatic chlorinated hydrocarbons, preferably dichloromethane, trichlorethylene, 1,1,1-trichloroethane, 1,1,2-trichloroethane and chlorobenzene and mixtures thereof. However, it is also possible to use aromatic hydrocarbons such as benzene, toluene, m-/p-/o-xylene or aromatic ethers such as anisole alone, in admixture, or in addition to or in admixture with chlorinated hydrocarbons; preference is given to dichloromethane and chlorobenzene and mixtures thereof. Another embodiment of the method according to the invention employs solvents which do not dissolve, but rather only swell, polycarbonate. It is therefore also possible to use non-solvents for polycarbonate in combination with solvents. Solvents soluble in the aqueous phase such as tetrahydrofuran, 1,3- or 1,4-dioxane or 1,3-dioxolane can then also be used as solvents if the solvent partner forms the second organic phase.

In step (c) phosgene is added to the mixture of step (b). The introduction of the can be effected in gaseous form or in liquid form. The skilled person knows how to adjust the amount of phosgene in relation to the used diol(s) and tri- or tetrafunctional crosslinker(s) if used. Typically phosgene is used in a molar excess to the used diol(s) and tri- or tetrafunctional crosslinker(s) if used. However, this excess should be as low as possible for reasons of economy and ecology. Preferably, the molar ratio of phosgene to the diol(s) (and tri- or tetrafunctional crosslinker(s) if used) is 1.05 to 1.6.

Moreover, it is optional to add additional aqueous alkali solution. In the context of the present invention in process step (a) aqueous alkali solution is already used. This is why any further active addition of an aqueous alkali solution is called "additional" which means that further aqueous alkali solution is added. It is typically added for adjusting the pH. It is preferred that throughout the whole inventive process the pH is at least 8. In case additional aqueous alkali solution is added the amount is preferably chosen so that the resulting pH is at least 10.8, more preferably 11. The inventive process comprises several optional possibilities to add additional aqueous alkali solution. However, it is preferred that the number of additional additions of aqueous alkali solution is as low as possible. Most preferably, the additional aqueous alkali solution is only added in step (g) and/or (c) if necessary.

Any step of adding additional aqueous alkali solution is an exothermic reaction. According to the invention said step is preferably performed in a temperature range of -5 °C to100 °C, particularly preferably 15 °C to 80 °C, very particularly preferably 25 °C to 65 °C, wherein depending on the solvent or solvent mixture it may be performed under positive pressure. Different pressures may be used depending on the employed reactor. For example a pressure of 0.5 to 20 bar (absolute) may preferably be used.

According to the present invention it is preferred that in process step (c) additional aqueous alkali solution is added. In process step (a) typically stochiometric amounts or a small molar excess of alkali metal with respect to the diol(s) are used. It is preferred that in process step (c) additional aqueous alkali solution is added, so that the excess of phosgene is compensated.

Preferably, the pH after process step (c) is at least 10.8, more preferably at least 11.0, most preferably at least 11.5.

In process step (d) the mixture of step (c) is reacted for 2 to 30 minutes, preferably 2 to 20 minutes, most preferably 2 to 5 minutes. The skilled person knows how the "reaction" is performed. For example, the two phases can be mixed so that the two phases do not separate. At the same it is preferred that the reaction is conducted in a way that no solid precipitates.

Process step (e) comprises the optional addition of at least one chain terminator to the mixture of step (d) with the proviso that in case in step (a) no chain terminator was added, the addition of at least one chain terminator in step (e) is mandatory and
optionally adding at least one catalyst,
optionally adding additional aqueous alkali solution,
and in case at least one chain terminator and/or at least one catalyst is added in this step reacting the resulting mixture for 2 to 60 minutes, preferably 2 to 20 minutes, most preferably 2 to 5 minutes.

This means that process step (e) can be optional in case at least one chain terminator has already been added in process step (a). However, it is mandatory that process step (e) is conducted if in step (a) no chain terminator has been added. This is due to the fact that according to the present invention the use of a chain terminator is mandatory to result in a polycarbonate having a low saponifiable chlorine content.

The at least one chain terminator is generally monofunctional. The at least one chain terminator is preferably selected from the group consisting of monocyclic phenols, C₁-C₂₂ alkyl-substituted phenols, monoethers of diphenols, alkyl-substituted phenols with branched chain alkyl substituents having 8 to 9 carbon atoms, 4-substituted-2-hydroxybenzophenones, aryl salicylates, monoesters of diphenols, 2-(2-hydroxyaryl)-1,3,5-triazines, aromatic mono-carboxylic acid chlorides, aromatic polycyclic and mono-carboxylic acid chlorides. More preferably, the at least one chain terminator is selected from the group consisting of phenol, alkylphenols and chlorocarbonic acid esters thereof or acid chlorides of monocarboxylic acids, most preferably from phenol, tert-butylphenol and isooctylphenol, cumylphenol. Any desired mixtures of the recited chain terminators may be employed. The at least one chain terminator can be added to the aqueous and/or organic phase. It is preferred that the at least one chain terminator is dissolved in the organic phase. Preferably, 0.5 to 10 mol-%, more preferably 1 to 5 mol-% of the at least one chain terminator is used in the process of the present invention with respect to the mol of the sum of all diols. The skilled person knows that in case of the use of a trifunctional hydroxy compound the amount of the at least one chain terminator might be adapted so that in theory every chain end can be terminated by the at least one chain terminator.

Preferably, the process of the present invention is characterized in that step (e) and /or step (f) is mandatorily conducted. In case step (e) is conducted at least one chain terminator is added in step (e). This means that it is preferred that step (e) is mandatorily conducted and at least the at least one chain terminator is added. More preferably, only in step (e) (and not in step (a)) at least one chain terminator is added. It is preferred that in process step (e) no additional aqueous alkali solution is added.

Process step (f) comprises the optional addition of at least one catalyst to the mixture of step (d) or step (e), whichever step is carried out last, with the proviso that in case neither in step (a) nor in step (e) a catalyst was added, the addition of at least one catalyst in step (f) is mandatory, and in case at least one catalyst is added in this step reacting the resulting mixture for 2 to 60 minutes, preferably 10 to 50 minutes, more preferably 15 to 45 minutes, most preferably 25 to 35 minutes. Parallel to step (e), process step (f) can be optional in case at least one catalyst has already been added in process step (a) and/or (e). However, it is mandatory that process step (f) is conducted if neither in step (a) nor in step (e) at least one catalyst has been added. This is due to the fact that according to the present invention the use of a catalyst is mandatory to result in a polycarbonate with sufficiently high molecular weight in a reasonable reaction time.

However, it is preferred that step (f) is mandatorily conducted. More preferably, only in step (f) (and not in step (a) and/or (e)) at least one catalyst is added.

It is preferable that the at least one catalyst -irrespective of its time of addition - is selected from the group consisting of a tertiary amines, quaternary ammonium salts, quaternary phosphonium salts, and mixtures thereof. The at least one catalyst is very particularly preferably a tertiary amine or a mixture of at least two tertiary amines. Tertiary amines are likewise preferably triethylamine, tributylamine, trioctylamine, N-ethylpiperidine, *N-*methylpiperidine or *N-i*/*n*-propylpiperidine; these compounds are described in the literature as typical interfacial catalysts, are commercially available and are well known to those skilled in the art. The catalysts may also be added to the synthesis individually, in admixture or else simultaneously or successively. The metered addition of the catalyst or of the catalysts may be effected in pure form, in an inert solvent, preferably the solvent or one of the solvents of the organic phase of process step (b), or else as an aqueous solution. When using tertiary amines as catalyst the metered addition thereof may be effected for example in aqueous solution as ammonium salts thereof with acids, preferably mineral acids, in particular hydrochloric acid. It will be appreciated that when using two or more catalysts or when performing metered addition of subamounts of the total catalyst amount different modes of metered addition may be undertaken at different locations or at different junctures. The total amount of employed catalysts is preferably between 0.001 to 10 mol-%, preferably 0.01 to 8 mol-%, particularly preferably 0.05 to 5 mol-%, based on moles of employed diols.

In process step (g) according to the present invention the pH of the mixture obtained after step (d), (e) or (f), whichever step is carried out last, is determined and if required adjusted the pH by the addition of additional aqueous alkali solution so that the resulting pH is at least 10.0, preferably at least 10.1, more preferably at least 10.2, still more preferably at least 10.3, still more preferably at least 10.4, still more preferably at least 10.5, still more preferably at least 10.6, still more preferably at least 10.7 and still more preferably at least 10.8 and in case additional aqueous alkali solution is added in this step reacting the mixture for 2 to 30 minutes, preferably 2 to 20 minutes, most preferably 2 to 5 minutes.

The determination especially the measurement of the pH can be performed in ways known to the person skilled in the art. However, it is also possible to calculate the pH at process step (g).

According to the present invention it has been found that the pH at the end of the addition of all mandatory components plays a crucial role. Only if the pH is high enough, i. e. at least 10.0, preferably at least 10.1, more preferably at least 10.2, still more preferably at least 10.3, still more preferably at least 10.4, still more preferably at least 10.5, still more preferably at least 10.6, still more preferably at least 10.7 and still more preferably at least 10.8, the chain terminator can react with the polymer chain ends and thereby reduce the saponifiable chlorine content. This means that the determination of the pH during process step (g) is important in order to know whether it is high enough and to decide whether an additional addition of aqueous alkali solution is necessary. According to the present invention additional aqueous alkali solution can be also added in process step (a), (c) and/or (e). This means that the pH at step (g) can have already a value of at least 10.0 (or any preferred pH value as given above). In this case, no additional addition of aqueous alkali solution is necessary. However, still even if in step (a), (c) and/or (e) additional aqueous alkali solution has been added or if during none of these steps additional aqueous alkali solution has been added, the pH of the resulting solution can be below 10.0 (or any preferred pH value as given above). In this case the additional addition of aqueous alkali solution is mandatory to ensure the quality of the resulting polycarbonate. It is preferred that only in step (c) and step (g) of the present invention additional aqueous alkali solution is added.

Preferably, in at least one of steps (a), (c) or (e) the pH is determined before the optional addition of additional aqueous alkali solution and if required the pH is adjusted by the addition of additional aqueous alkali solution so that the resulting pH is at least 10.0, preferably at least 10.1, more preferably at least 10.2, still more preferably at least 10.3, still more preferably at least 10.4, still more preferably at least 10.5, still more preferably at least 10.7 and most preferably at least 10.8. More preferably, the pH after each of process steps (a) to (g) is at least 10.0, preferably at least 10.1, more preferably at least 10.2, still more preferably at least 10.3, still more preferably at least 10.4, still more preferably at least 10.5, still more preferably 10.7 and most preferably at least 10.8.

Preferably, the polycarbonate of the present invention is obtained by the process of the present invention. Accordingly, all preferences as given with respect to the polycarbonate of the present invention preferably apply to the polycarbonate as obtained according to the process of the present invention. After the process of the present invention the polycarbonate can be isolated. Workup comprises leaving the reacted at least biphasic reaction mixture containing at most traces, preferably less than 2 ppm, of chlorocarbonic acid esters to settle for phase separation. The aqueous alkaline phase is optionally completely or partially recycled to the polycarbonate synthesis as aqueous phase or else passed to the wastewater workup where solvent and catalyst fractions are separated and optionally recycled to the polycarbonate synthesis. In another variant of the workup, separation of the organic impurities, in particular solvents and polymer residues, and optionally adjustment to a particular pH, for example by addition of sodium hydroxide solution, is followed by separation of the salt which may be sent for chloralkali electrolysis for example while the aqueous phase is optionally returned to the polycarbonate synthesis.

The organic phase containing the polycarbonate can then be purified in various ways known to those skilled in the art for removal of alkali metal, ionic or catalytic contamination. Isolation of the polycarbonate from the solution can be effected by evaporation of the solvent using temperature, vacuum or a heated entraining gas. Other isolation methods include for example crystallization and precipitation.

The process of the present invention can be conducted continuously or in a batch process. Preferably, the process of the present invention is conducted continuously.

Preferably, throughout the whole process according to the present invention no emulsifying agent is used. The skilled person knows emulsifying agents. A commonly used emulsifying agent for the production of polycarbonates is sodium gluconate. By not using such an emulsifying agent, the work up is easier and thereby less effort needs to be applied for obtaining a polycarbonate.

### Examples

Size exclusion chromatography was performed using a PSS SECcurity System; polycarbonate calibration (according to 2301-0257502-09D method of company Currenta GmbH & Co. OHG, Leverkusen), dichloromethane as eluent, column 1 (PL-PC5) with a concentration of 2 g/l, flow rate 1.0 ml/min, at a temperature of 30 °C using UV and/or RI detection.

The saponifiable chlorine content was determined with UV absorption after reaction with 4-(4-nitrobenzyl)pyridine. A Perkin Elmer Lambda 365 spectrophotometer was used. Bisphenol A bis(chloroformate) was used as calibration substance due to its known chlorine content. The polycarbonate was dissolved in dichloromethane and reacted with a 4-(4-nitrobenzyl)pyridine solution in dichloromethane. The saponifiable chlorine content (mg/kg) was determined by measuring the absorption at 438 nm compared to the absorption at 600 nm. For the determination of OH-groups, the polycarbonate was dissolved in dichloromethane (2 g / *50* mL; 1mm quartz cuvette) and analyzed with the Fourrier Transform-Infrared Spectrometer Nicolet iS20 of Thermo Fisher Scientific. The content of phenolic OH groups was determined by the analysis of the band at 3583 cm⁻¹.

The glass transition temperature was determined by DSC using ISO 11357-2:2013-05 at a heating rate of 10 °C/min.

### Abbreviations:

BPL1: 4,4'-propylidenebis(2-methoxyphenol), recrystallized in toluene
BPL2: mixture of 67 mol-% 4,4'-propylidenebis(2-methoxyphenol) and 33 mol-% of the respective *meta, para-isomer*
BPA: bisphenol A
DOD: 4,4'-dihydroxybiphenyl
BP-TMC: 1,1-bis(4-hydroxyphenyl)-3,3,5-trimethylcyclohexane
THPE: tris(4-hydroxyphenyl)ethane

### General procedure for polymerization:

The laboratory batch reaction was conducted in a stirred glass reactor vessel. The diol or diol mixture (or THPE) was added to demineralized water in which NaOH has been dissolved (2.6 moles of NaOH per mol diol) to achieve a 5 wt% diol solution. Subsequently, methylene chloride was added to the diol solution, in an amount calculated to deliver a 15 wt% PC solution after completing the reaction. The agitator was set to a fixed speed to create an oil in water dispersion. Phosgene was added in a semi-batch feed using a mass-flow meter during 12 minutes, through a dip tube into the agitated solution. Per mol of diol (and THPE if necessary), 1.28 mol of phosgene was added to ensure full conversion of the bisphenol. After the addition of phosgene was completed, 0.035 mol p-tert-butylphenol per mol diol was added as chain terminator. After 5 minutes of reaction time, further NaOH was added to bring the pH to a value of 11 together with 0.015 mol N-ethylpiperidine per mol of diol. It is normal for the pH to drop during the post-reaction time. The pH was determined using a Mettler Toledo DG 111-SC pH electrode.

The comparative examples were stopped after 30 minutes of post-reaction time. The sample was washed once with 10% HCl and then with demineralized water until the conductivity of the water is below 100 µS after separation. The samples were dried with Na₂SO₄ and filtered over a folded paper filter (Whatman 113V, ϕ 320 nm). The polymers were dried in the vacuum oven overnight at 120 °C at 20 mbar).

For the inventive examples the reaction was completed (full conversion of Cl end groups) by further adding NaOH to raise the pH back to at least 10.0. The solution was stirred for a post-reaction time of 30 minutes after the pH remained stable. The total time from starting the additions to the end of the post-reaction time was approximately 2 hours. Phosgene leak detection paper was used to check for residual chlorine end groups, and when the reaction was ended, the sample was washed once with 10% HCl and then with demineralized water until the conductivity of the water is below 100 µS after separation.. The samples were dried with Na₂SO₄ and filtered over a folded paper filter (Whatman 113V, ϕ 320 nm). The polymers were dried in the vacuum oven overnight at 120 °C at 20 mbar).

**Table 1:**

| **Example** | **Diol** | **Mn (g/mol)** | **pH at the end of the reaction** | **Saponifiable Cl (mg/kg)** | **OH end groups (mg/kg)** | **Tg (°C)** |
|---|---|---|---|---|---|---|
| 1 (comparative) | BPL2 | 11000 | 8.9 | 50.8 | 117 | 118.5 |
| 2 (comparative) | BPL2/BPA (ratio 44:56 mol-%) | 3635 | 8.4 | 4.26 | 286 | 112.5 |
| 3 (comparative) | BPL2/BP-TMC (ratio 57:43 mol-%) | 8140 | 8.9 | 367 | - | 147.2 |
| 4 (comparative) | BPL2/THPE (1.22 mol-% THPE) | 15510 | 8.8 | 28.5 | 86 | 120.2 |
| 5 (inventive) | BPL2/BP-TMC (ratio 57:43 mol-%) | 10050 | 10.8 | 5.19 | 25 | 152.1 |
| 6 (inventive) | BPL2/THPE (1.22 mol-% THPE) | 10290 | 11.0 | 5.77 | 100 | 118.0 |
| 7 (comparative) | BPL2/BPA (ratio 44:56 mol-%) | 11930 | 9.6 | 21.8 | 20 | 129.9 |
| 8 (inventive) | BPL1 | 10390 | 11.6 | 3.35 | 146 | 118.9 |
| 9 (inventive) | BPL2 | 8720 | 11.8 | 18.8 | 115 | 118.5 |
| 10 (comparative) | BPA | 12000 | 9.3 | 0.4 | 13.0 | 150.4 |
| 11 (comparative) | BPA | 11473 | 11.1 | 0.6 | 78.5 | 150.9 |
| 12 (inventive) | BPL1 | 11210 | 10.0 | 6.7 | 165 | 120.7 |

From the above-mentioned table it can be seen that if the pH is below 10.0 at the end of the reaction, the saponifiable chlorine content is quite high (example 1). This is irrespective of the fact whether additional comonomers are used (cf. examples 2 to 4 and example 7). Moreover, from the high saponifiable chlorine content and the amount of the OH end groups it can be seen that the chain terminator, which is used in these comparative examples does not fully react with the polymer chain ends.

Increasing the pH at the end of the reaction to at least 10.0 leads to an decrease in the saponifiable chlorine content (cf. examples 5, 6, 8, 9 and 12). At the same time in many cases high molecular weights are obtained. In addition also the OH end group content is at an acceptable level. This data indicates that the chain terminator effectively reacts with the polymer chain ends. In addition, the polymerization as such is nearly completed. These effects occur for homopolymers as well es copolymers including branched copolymers.

Moreover, as can be seen from comparative examples 10 and 11, the polymerization of BPA at an pH of 9.3 already seems to give a polycarbonate having good qualities. The increase of the pH to 11.1 (comparative example 11) even shows that the properties of a polycarbonate comprising BPA do not get better, if not slightly decrease.

## Claims

1. A polycarbonate comprising at least 30 wt-% of structural units of formula (1), wherein the wt.-% is based on the total weight of the polycarbonate, 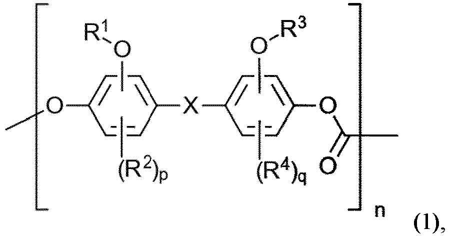 wherein
each X independently represents a single bond, -O-, -S-, -S(O)-, -S(O)₂-, -C(O)-, or an organic group having 1 to 18 carbon atoms, wherein the organic group having 1 to 18 carbon atoms can be linear, branched or cyclic, aromatic or non-aromatic, and can further comprise heteroatoms such as halogens, oxygen, nitrogen, sulfur, silicon or phosphorous,
each of R¹ and R³ independently represents a monovalent hydrocarbon group, preferably C₁-C₂₆-alkyl, C₇-C₂₆ alkylaryl or C₇-C₂₆-aralkyl,
each of R² and R⁴ independently represents a hydrogen atom, an alkoxy group, or a monovalent hydrocarbon group, preferably a hydrogen atom, C₁-C₆-alkoxy or C₁-C₆-alkyl, and
each of p and q independently is 1 or 2, preferably 1 and
n represents the average number of repeating units,
**characterized in that** the polycarbonate is terminated with at least one aromatic group which can be optionally substituted with at least one C₁-C₆ alkyl group, has a total saponifiable chlorine content, determined as disclosed in the description, of 0.2 ppm to 19 ppm with respect to the mass of the polycarbonate and a number average molecular weight of 8 000 g/mol to 20 000 g/mol as determined *via* gel permeation chromatography in dichloromethane using a bisphenol A-polycarbonate calibration.

2. The polycarbonate according to claim 1, **characterized in that** in formula (1) each X independently represents a substituted or unsubstituted C₃-C₁₈-cycloalkylidene; a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula -C(=R^{c})- wherein R^{c} is a divalent C₁ -C₁₂-hydrocarbon group,
each of R¹ and R³ independently represents C₁-C₂₆-alkyl, C₇-C₂₆ alkylaryl or C₇-C₂₆-aralkyl,
each of R² and R⁴ independently represents a hydrogen atom, C₁-C₆-alkoxy or C₁-C₆-alkyl, and
each of p and q independently is 1 and
n represents the average number of repeating units.

3. The polycarbonate according to claim 1 or 2, **characterized in that** in formula (1) each X independently represents a C₁-C₆-alkylidene of the formula -C(R^{c})(R^{d)}-wherein R^{c} and R^{d} are each independently hydrogen or C₁-C₅-alkyl.

4. The polycarbonate according to anyone of claims 1 to 3, **characterized in that** in formula (1)
each X independently represents a C₁-C₄-alkylidene of the formula -C(R^{c})(R^{d})-wherein R^{c} and R^{d} are each independently hydrogen or C₁-C₃-alkyl,
each of R¹ and R³ independently represents methyl or ethyl,
each of R² and R⁴ independently represents a hydrogen atom, methyl, ethyl or propyl and n represents the average number of repeating units.

5. The polycarbonate according to anyone of claims 1 to 4, **characterized in that** the polycarbonate additionally comprises at least one structural unit selected from the group of structural units of formula (2) to (10), (IIa), (IIb), (IIc), (IId), (IIe) and (IIf) 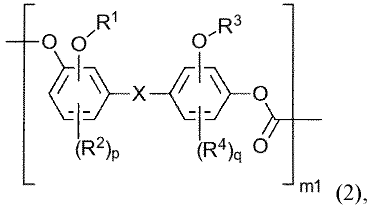
wherein X, R² to R⁴, p and q are as defined in any one of claims 1 to 4, and m1 represents the average number of repeating units; 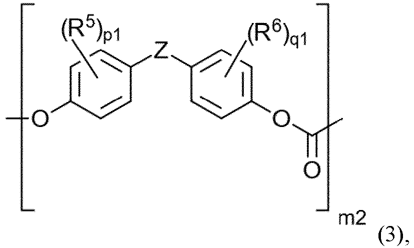
wherein each Z independently represents a single bond, -S(=O)₂-, -C(=O)-, -O-, -S-, - S(=O)-, -CH(CN)-, linear or branched C₁-C₆-alkylene which optionally comprises at least one carbonyl-group, optionally comprises at least one halogen atom and/or optionally is interrupted by at least one heteroatom, C₂-C₁₀-alkylidene which optionally comprises at least one carbon-carbon-double bond, optionally comprises at least one carbonyl-group and/or optionally comprises at least one halogen atom, C₅-C₁₂-cycloalkylene, wherein the cycloaliphatic group is fused to at least one further cycloaliphatic ring, C₅-C₁₅-cycloalkylidene wherein the cycloaliphatic group is optionally fused to at least one cycloaliphatic and /or at least one aromatic ring, C₇-C₂₀-aralkylidene, C₈-C₂₀-aralkylene, C₆-C₁₂-arylene optionally being fused to further aromatic rings which optionally may comprise at least one hetero atom, formula (B1-A), formula (B1-B), formula (B1-C) or formula (B1-D) 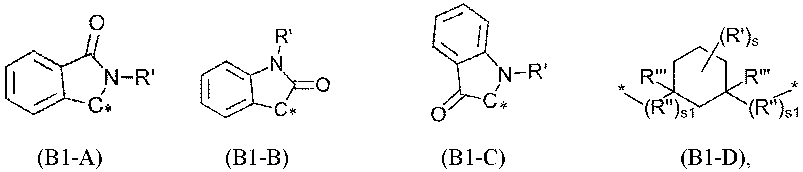
wherein in formulae (B1-A), (B1-B) and (B1-C) each R' independently represents a linear C₁-C₄-alkyl, branched C₃-C₄-alkyl, aralkyl or aryl and the "C*" indicates the quaternary carbon atom which is at the position indicated as "Z" in formula (3), and
wherein in formula (B1-D) each R' independently represents a linear C₁-C₄-alkyl, branched C₃-C₄-alkyl, each R" independently represents a linear C₁-C₄-alkylene, branched C₃-C₄-alkylene, each R‴ independently represents H or linear C₁-C₃-alkyl, s is 0 to 2 and each s1 independently is 0 or 1, and the "*" indicate the bonds which link "Z" to the aromatic rings in formula (3),
each R⁵ and R⁶ independently represents H, C₁-C₁₈-alkyl, C₅-C₆-cycloalkyl, C₁-C₅-alkenyl-, C₁-C₁₈-alkoxy, phenoxy, halogen atom, C₆-C₁₈-aryl or C₇-C₁₈-aralkyl,
each of p1 and q1 is 1 to 4 and
m2 represents the average number of repeating units; 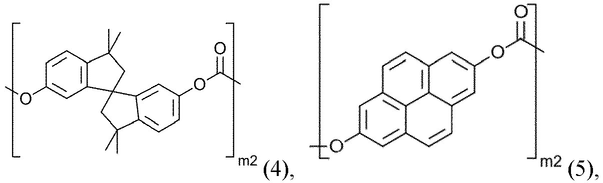 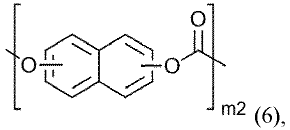
wherein in formula (4) to (6) m2 represents the average number of repeating units; 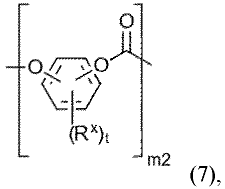
wherein each R^{x} independently represents linear or branched C₁-C₆-alkyl, C₁-C₁₂-aryl, C₁-C₈-aralkyl or a halogen atom, t is 0 to 4 and m2 represents the average number of repeating units; 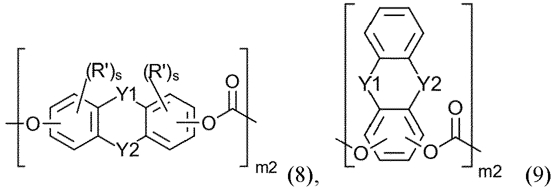
wherein in formula (8) and (9) each Y1 independently represents oxygen, sulfur or N-R^{y}, wherein R^{y} is H or -CH₃, each Y2 interpedently represents a single bond, oxygen, sulfur or N-R^{y} as defined above and m2 represents the average number of repeating units and in formula (8) each R' independently represents a linear C₁-C₄-alkyl, branched C₃-C₄ alkyl, aralkyl or aryl and s is 0 to 2; 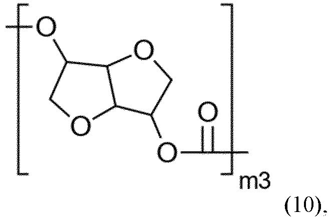
wherein m3 represents the average number of repeating units; 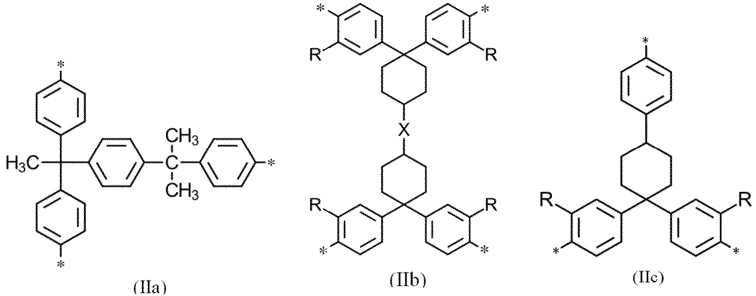 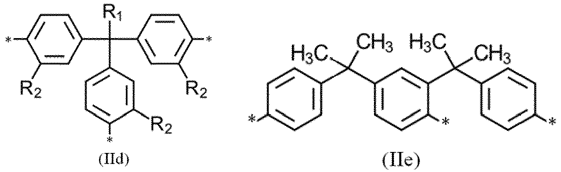 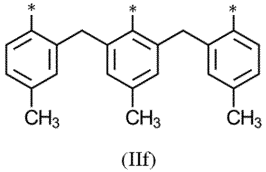
wherein the "*" represents the connection of the cross-linking point to the polycarbonate polymer chain and wherein
R in formula (IIb) and (IIc) is independently selected from the group consisting of H and alkyl, preferably H and methyl,
X in formula (IIb) is selected from the group consisting of linear or branched alkyl and a single bond, preferably C(CH₃)₂ and a single bond,
R¹ in formula (iid) is selected from the group consisting of H and alkyl, preferably H and methyl, and
R² in formula (IId) is independently selected from the group consisting of H and alkyl, preferably H and methyl.

6. The polycarbonate according to anyone of claims 1 to 5, wherein the at least one aromatic group that terminates the polycarbonate chains and which can be optionally substituted with at least one C₁-C₆ alkyl group is selected from the group consisting of formulae (5a), (6a), (7a), (8a) and (9a), wherein 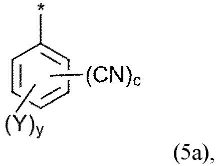
wherein each Y independently represents a halogen atom, C₁-C₃-alkyl, C₁-C₃-alkoxy, C₇-C₁₂-arylalkyl, C₇-C₁₂-alkylaryl or a nitro group,
y is 0 to 4, and c is 1 to 5, with the proviso that y+c is 1 to 5, 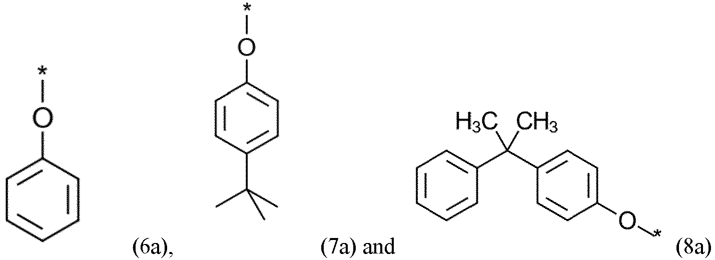
and each "*" indicates the position, which links the structure of formula (5a), (6a), (7a) or (8a) to the polycarbonate.

7. A molding compound comprising the polycarbonate of any one of claims 1 to 6.

8. A molded article comprising the polycarbonate of any one of claims 1 to 6.

9. A process for preparing a polycarbonate comprising at least 30 wt-% of structural units of formula (1), wherein the wt.-% is based on the total weight of the polycarbonate, 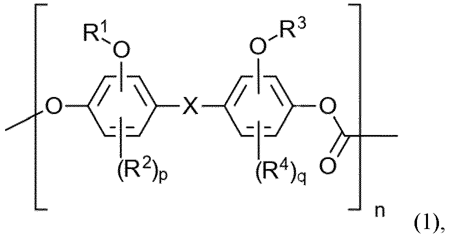 wherein in formula (1)
each X independently represents a single bond, -O-, -S-, -S(O)-, -S(O)₂-, -C(O)-, or an organic group having 1 to 18 carbon atoms, wherein the organic group having 1 to 18 carbon atoms can be linear, branched or cyclic, aromatic or non-aromatic, and can further comprise heteroatoms such as halogens, oxygen, nitrogen, sulfur, silicon or phosphorous,
each of R¹ and R³ independently represents a monovalent hydrocarbon group, preferably C₁-C₂₆-alkyl, C₇-C₂₆ alkylaryl or C₇-C₂₆-aralkyl,
each of R² and R⁴ independently represents a hydrogen atom, an alkoxy group, or a monovalent hydrocarbon group, preferably a hydrogen atom, C₁-C₆-alkoxy or C₁-C₆-alkyl, and
each of p and q independently is 1 or 2, preferably 1 and
n represents the average number of repeating units,
the process comprising
(a) dissolving at least one diol of formula (I) in an aqueous alkali solution 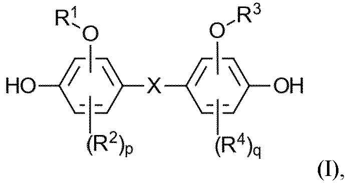 wherein in formula (I)
each X independently represents a single bond, -O-, -S-, -S(O)-, -S(O)₂-, -C(O)-, or an organic group having 1 to 18 carbon atoms, wherein the organic group having 1 to 18 carbon atoms can be linear, branched or cyclic, aromatic or non-aromatic, and can further comprise heteroatoms such as halogens, oxygen, nitrogen, sulfur silicon or phosphorous,
each of R¹ and R³ independently represents a monovalent hydrocarbon group, preferably C₁-C₂₆-alkyl, C₇-C₂₆ alkylaryl or C₇-C₂₆-aralkyl,
each of R² and R⁴ independently represents a hydrogen atom, an alkoxy group, or a monovalent hydrocarbon group, preferably a hydrogen atom, C₁-C₆-alkoxy or C₁-C₆-alkyl, and
each of p and q independently is 1 or 2, preferably 1 and
optionally adding at least one chain terminator,
optionally adding at least one catalyst and
optionally adding additional aqueous alkali solution,
to result in a solution,
(b) adding an organic solvent suitable for dissolving polycarbonate to the solution of step (a) and thereby obtaining a mixture,
(c) adding phosgene to the mixture of step (b) and optionally adding additional aqueous alkali solution,
(d) reacting the mixture of step (c) for 2 to 30 minutes, preferably 2 to 20 minutes, most preferably 2 to 5 minutes,
(e) optionally adding at least one chain terminator to the mixture of step (d) with the proviso that in case in step (a) no chain terminator was added, the addition of at least one chain terminator in step (e) is mandatory and
optionally adding at least one catalyst,
optionally adding additional aqueous alkali solution,
and in case at least one chain terminator and/or at least one catalyst is added in this step reacting the resulting mixture for 2 to 60 minutes, preferably 2 to 20 minutes, most preferably 2 to 5 minutes,
(f) optionally adding at least one catalyst to the mixture of step (d) or step (e), whichever step is carried out last, with the proviso that in case neither in step (a) nor in step (e) a catalyst was added, the addition of at least one catalyst in step (f) is mandatory,
and in case at least one catalyst is added in this step reacting the resulting mixture for 2 to 60 minutes, preferably 10 to 50 minutes, more preferably 15 to 45 minutes, most preferably 25 to 35 minutes,
(g) determine the pH of the mixture obtained after step (d), (e) or (f), whichever step is carried out last, and if required adjusting the pH by the addition of additional aqueous alkali solution so that the resulting pH is at least 10.0
and in case additional aqueous alkali solution is added in this step reacting the mixture for 2 to 30 minutes, preferably 2 to 20 minutes, most preferably 2 to 5 minutes.

10. The process according to claim 9, **characterized in that** step (e) and /or step (f) is mandatorily conducted.

11. The process according to anyone of claims 9 or 10, **characterized in that** in step (e) is mandatorily conducted and at least the at least one chain terminator is added.

12. The process according to anyone of claims 9 to 11, **characterized in that** in at least one of steps (a), (c) or (e) the pH is determined before the optional addition of additional aqueous alkali solution and if required the pH is adjusted by the addition of additional aqueous alkali solution so that the resulting pH is at least 10.0.

13. The process according to anyone of claims 9 to 12, **characterized in that** the at least one catalyst is selected from the group consisting of tertiary amines, quaternary ammonium salts, quaternary phosphonium salts, and mixtures thereof.

14. The process according to anyone of claims 9 to 13, **characterized in that** the at least one chain terminator is selected from the group consisting of monocyclic phenols,C₁-C₂₂ alkyl-substituted phenols, monoethers of diphenols, alkyl-substituted phenols with branched chain alkyl substituents having 8 to 9 carbon atoms, 4-substituted-2-hydroxybenzophenones, aryl salicylates, monoesters of diphenols, 2-(2-hydroxyaryl)-1,3,5-triazines, aromatic mono-carboxylic acid chlorides, aromatic polycyclic and mono-carboxylic acid chlorides.

15. The process according to anyone of claims 9 to 14, **characterized in that** in formulae (1) and (I)
each X independently represents a substituted or unsubstituted C₃-C₁₈-cycloalkylidene; a C₁-C₁₈-alkylidene of the formula -C(R^{c})(R^{d})- wherein R^{c} and R^{d} are each independently hydrogen, C₁-C₁₂-alkyl, C₁-C₁₂-cycloalkyl, C₇-C₁₂-arylalkyl, C₁-C₁₂-heteroalkyl, or cyclic C₇-C₁₂-heteroarylalkyl; or a group of the formula -C(=R^{c})- wherein R^{c} is a divalent C₁ -C₁₂-hydrocarbon group,
each of R¹ and R³ independently represents C₁-C₂₆-alkyl, C₇-C₂₆ alkylaryl or C₇-C₂₆-aralkyl,
each of R² and R⁴ independently represents a hydrogen atom, C₁-C₆-alkoxy or C₁-C₆-alkyl, and
each of p and q independently is 1.

## Patentansprüche

1. Polycarbonat, umfassend mindestens 30 Gew.-% Struktureinheiten der Formel (1), wobei sich die Gew.-%-Angabe auf das Gesamtgewicht des Polycarbonats bezieht, 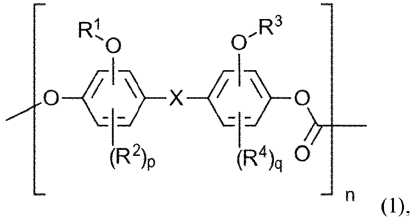 wobei
X jeweils unabhängig für eine Einfachbindung, -O-, -S-, -S(O)-, -S(O)₂-, -C(O)- oder eine organische Gruppe mit 1 bis 18 Kohlenstoffatomen steht, wobei die organische Gruppe mit 1 bis 18 Kohlenstoffatomen linear, verzweigt oder cyclisch, aromatisch oder nichtaromatisch sein kann und ferner Heteroatome wie Halogene, Sauerstoff, Stickstoff, Schwefel, Silicium oder Phosphor umfassen kann,
R¹ und R³ jeweils unabhängig für eine einwertige Kohlenwasserstoffgruppe, vorzugsweise C₁-C₂₆-Alkyl, C₇-C₂₆-Alkylaryl oder C₇-C₂₆-Aralkyl, stehen,
R² und R⁴ jeweils unabhängig für ein Wasserstoffatom, eine Alkoxygruppe oder eine einwertige Kohlenwasserstoffgruppe, vorzugsweise ein Wasserstoffatom, C₁-C₆-Alkoxy oder C₁-C₆-Alkyl, stehen und p und q jeweils unabhängig 1 oder 2, vorzugsweise 1, sind und
n für die durchschnittliche Zahl von Wiederholungseinheiten steht,
**dadurch gekennzeichnet, dass** das Polycarbonat mit mindestens einer aromatischen Gruppe, die gegebenenfalls durch mindestens eine C₁-C₆-Alkylgruppe substituiert sein kann, terminiert ist, einen gemäß der Beschreibung bestimmten Gesamtgehalt an verseifbarem Chlor von 0,2 ppm bis 19 ppm, bezogen auf die Masse des Polycarbonats, und ein durch Gelpermeationschromatographie in Dichlormethan unter Verwendung einer Bisphenol-A-Polycarbonat-Kalibrierung bestimmtes zahlenmittleres Molekulargewicht von 8000 g/mol bis 20.000 g/mol aufweist.

2. Polycarbonat nach Anspruch 1, **dadurch gekennzeichnet, dass** in Formel (1)
X jeweils unabhängig für ein substituiertes oder unsubstituiertes C₃-C₁₈-Cycloalkyliden, ein C₁-C₁₈-Alkyliden der Formel -C(R^{c})(R^{d}) -, wobei R^{c} und R^{d} jeweils unabhängig Wasserstoff, C₁-C₁₂-Alkyl, C₁-C₁₂-Cycloalkyl, C₇-C₁₂-Arylalkyl, C₁-C₁₂-Heteroalkyl oder cyclisches C₇-C₁₂-Heteroarylalkyl sind, oder eine Gruppe der Formel - C (=R^{c}) -, wobei R^{c} eine zweiwertige C₁-C₁₂-Kohlenwasserstoffgruppe ist, steht,
R¹ und R³ jeweils unabhängig für C₁-C₂₆-Alkyl, C₇-C₂₆-Alkylaryl oder C₇-C₂₆-Aralkyl stehen,
R² und R⁴ jeweils unabhängig für ein Wasserstoffatom, C₁-C₆-Alkoxy oder C₁-C₆-Alkyl stehen und
p und q jeweils unabhängig 1 sind und
n für die durchschnittliche Zahl von Wiederholungseinheiten steht.

3. Polycarbonat nach Anspruch 1 oder 2, **dadurch gekennzeichnet, dass** in Formel (1)
X jeweils unabhängig für ein C₁-C₆-Alkyliden der Formel - C(R^{c})(R^{d})-, wobei R^{c} und R^{d} jeweils unabhängig Wasserstoff oder C₁-C₃-Alkyl sind, steht.

4. Polycarbonat nach einem der Ansprüche 1 bis 3, **dadurch gekennzeichnet, dass** in Formel (1)
X jeweils unabhängig für ein C₁-C₄-Alkyliden der Formel - C(R^{c})(R^{d})-, wobei R^{c} und R^{d} jeweils unabhängig Wasserstoff oder C₁-C₃-Alkyl sind, steht,
R¹ und R³ jeweils unabhängig für Methyl oder Ethyl stehen, R² und R⁴ jeweils unabhängig für ein Wasserstoffatom, Methyl, Ethyl oder Propyl stehen und n für die durchschnittliche Zahl von Wiederholungseinheiten steht.

5. Polycarbonat nach einem der Ansprüche 1 bis 4, **dadurch gekennzeichnet, dass** das Polycarbonat zusätzlich mindestens eine aus der Gruppe der Struktureinheiten der Formel (2) bis (10), (IIa), (IIb), (IIC), (IId), IIE) und IIf) ausgewählte Struktureinheit umfasst: 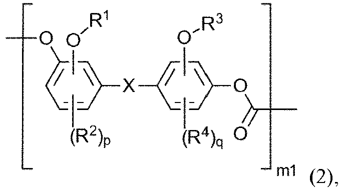
wobei X, R² bis R⁴, p und q wie in einem der Ansprüche 1 bis 4 definiert sind und m1 für die durchschnittliche Zahl von Wiederholungseinheiten steht; 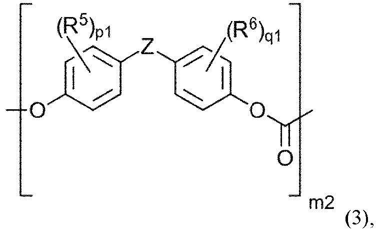
wobei Z jeweils unabhängig für eine Einfachbindung, - S(=O)₂-, -C(=O)-, -O-, -S-, -S(=O)-, -CH(CN)-, lineares oder verzweigtes C₁-C₆-Alkylen, das gegebenenfalls mindestens eine Carbonylgruppe umfasst, gegebenenfalls mindestens ein Halogenatom umfasst und/oder gegebenenfalls durch mindestens ein Heteroatom unterbrochen ist, C₂-C₁₀-Alkyliden, das gegebenenfalls mindestens eine Kohlenstoff-Kohlenstoff-Doppelbindung umfasst, gegebenenfalls mindestens eine Carbonylgruppe umfasst, C₅-C₁₂-Cycloalkylen, wobei die cycloaliphatische Gruppe an mindestens einen weiteren cycloaliphatischen Ring ankondensiert ist, C₅-C₁₅-Cycloalkyliden, wobei die cycloaliphatische Gruppe gegebenenfalls an mindestens einen cycloaliphatischen und/oder mindestens einen aromatischen Ring ankondensiert ist, C-₇-C₂₀-Aralkyliden, C₈-C₂₀-Aralkylen, C₆-C₁₂-Arylen, das gegebenenfalls an weitere aromatische Ringe, die gegebenenfalls mindestens ein Heteroatom umfassen können, ankondensiert sind, Formel (B1-A), Formel (B1-B), Formel (B1-C) oder Formel (B1-D) steht, 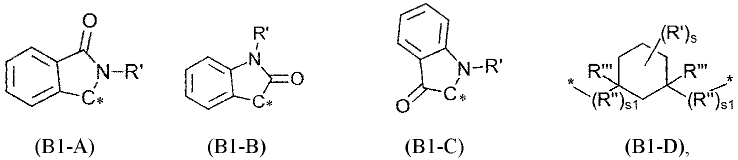
wobei in den Formeln (B1-A), (B1-B) und (B1-C) R' jeweils unabhängig für ein lineares C₁-C₄-Alkyl, verzweigtes C₃-C₄-Alkyl, Aralkyl oder Aryl steht und das "C*" das quartäre Kohlenstoffatom anzeigt, das sich in der in Formel (3) als "Z" angegebenen Position befindet, und
wobei in Formel (B1-D) R' jeweils unabhängig für ein lineares C₁-C₄-Alkyl oder verzweigtes C₃-C₄-Alkyl steht, R" jeweils unabhängig für ein lineares C₁-C₄-Alkylen oder verzweigtes C₃-C₄-Alkylen steht, R‴ jeweils unabhängig für H oder lineares C₁-C₃-Alkyl steht, s 0 bis 2 ist und s1 jeweils unabhängig 0 oder 1 ist und "*" die Bindungen anzeigt, die "Z" mit den aromatischen Ringen in Formel (3) verknüpfen,
R⁵ und R⁶ jeweils unabhängig für H, C₁-C₁₈-Alkyl, C₅-C₆-Cycloalkyl, C₁-C₅-Alkenyl-, C₁-C₁₈-Alkoxy, Phenoxy, Halogenatom, C₆-C₁₈-Aryl oder C₇-C₁₈-Aralkyl stehen,
p1 und q1 jeweils 1 bis 4 sind und
m2 für die durchschnittliche Zahl von Wiederholungseinheiten steht; 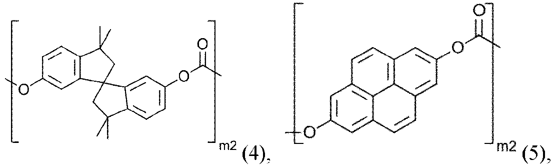 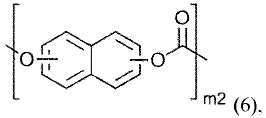
wobei in Formel (4) bis (6) m2 für die durchschnittliche Zahl von Wiederholungseinheiten steht; 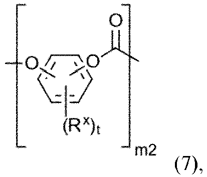
wobei R^{x} jeweils unabhängig für lineares oder verzweigtes C₁-C₆-Alkyl, C₁-C₁₂-Aryl, C₁-C₈-Aralkyl oder ein Halogenatom steht, t 0 bis 4 ist und m2 für die durchschnittliche Zahl von Wiederholungseinheiten steht; 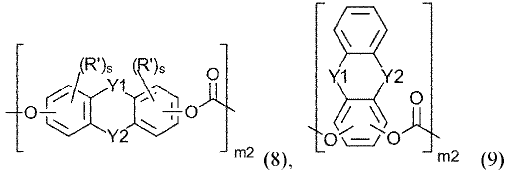
wobei in Formel (8) und (9) Y1 jeweils unabhängig für Sauerstoff, Schwefel oder N-R^{y} steht, wobei R^{y} H oder - CH₃ ist, Y2 jeweils unabhängig für eine Einfachbindung, Sauerstoff, Schwefel oder N-R^{y} gemäß obiger Definition steht und m2 für die durchschnittliche Zahl von Wiederholungseinheiten steht und in Formel (8) R' jeweils unabhängig für ein lineares C₁-C₄-Alkyl, verzweigtes C₃-C₄-Aryl oder Aryl steht und s 0 bis 2 ist; 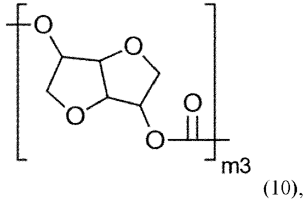
wobei m3 für die durchschnittliche Zahl von Wiederholungseinheiten steht; 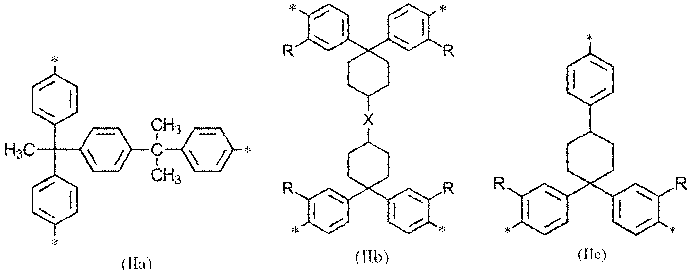 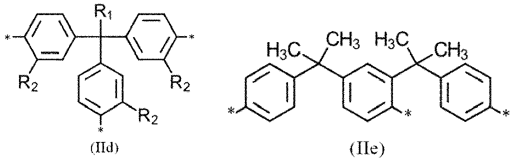 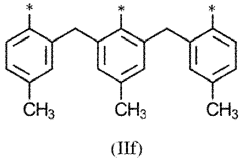
wbei das "*" die Verbindung des Vernetzungspunkts mit der Polycarbonatpolymerkette repräsentiert und wobei
R in Formel (IIb) und (IIc) unabhängig aus der Gruppe bestehend aus H und Alkyl, vorzugsweise H und Methyl, ausgewählt ist,
X in Formel (IIb) aus der Gruppe bestehend aus linearem oder verzweigtem Alkyl und einer Einfachbindung, vorzugsweise C(CH₃)₂ und einer Einfachbindung, ausgewählt ist,
R₁ in Formel (IId) aus der Gruppe bestehend aus H und Alkyl, vorzugsweise H und Methyl, ausgewählt ist und
R₂ in Formel (IId) unabhängig aus der Gruppe bestehend aus H und Alkyl, vorzugsweise H und Methyl, ausgewählt ist.

6. Polycarbonat nach einem der Ansprüche 1 bis 5, wobei die mindestens eine aromatische Gruppe, die die Polycarbonatketten terminiert und die gegebenenfalls durch mindestens eine C₁-C₆-Alkylgruppe substituiert sein kann, aus der Gruppe bestehend aus den Formeln (5a), (6a), (7a), (8a) und (9a) ausgewählt ist, wobei 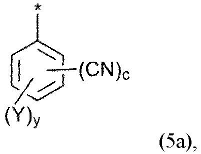
wobei Y jeweils unabhängig für ein Halogenatom, C₁-C₃-Alkyl, C₁-C₃-Alkoxy, C-₇-C₁₂-Arylalkyl, C₇-C₁₂-Alkylaryl oder eine Nitrogruppe steht,
y 0 bis 4 ist und c 1 bis 5 ist, mit der Maßgabe, dass y+c 1 bis 5 ist, 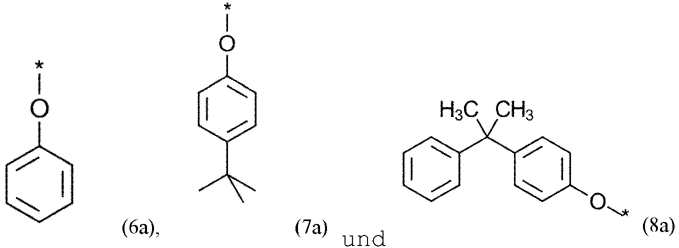
und "*" jeweils die Position anzeigt, die die Struktur der Formel (5a), (6a), (7a) oder (8a) mit dem Polycarbonat verknüpft.

7. Formmasse, umfassend das Polycarbonat nach einem der Ansprüche 1 bis 6.

8. Formkörper, umfassend das Polycarbonat nach einem der Ansprüche 1 bis 6.

9. Verfahren zur Herstellung eines Polycarbonats, das mindestens 30 Gew.-% Struktureinheiten der Formel (1) umfasst, wobei sich die Gew.-%-Angabe auf das Gesamtgewicht des Polycarbonats bezieht, 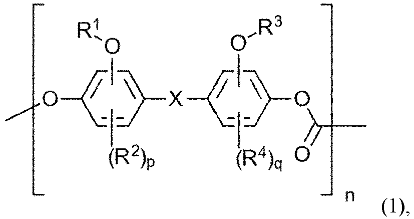 wobei in Formel (1)
X jeweils unabhängig für eine Einfachbindung, -O-, -S-, -S(O)-, -S(O)₂-, -C(O)- oder eine organische Gruppe mit 1 bis 18 Kohlenstoffatomen steht, wobei die organische Gruppe mit 1 bis 18 Kohlenstoffatomen linear, verzweigt oder cyclisch, aromatisch oder nichtaromatisch sein kann und ferner Heteroatome wie Halogene, Sauerstoff, Stickstoff, Schwefel, Silicium oder Phosphor umfassen kann,
R¹ und R³ jeweils unabhängig für eine einwertige Kohlenwasserstoffgruppe, vorzugsweise C₁-C₂₆-Alkyl, C₇-C₂₆-Alkylaryl oder C₇-C₂₆-Aralkyl, stehen,
R² und R⁴ jeweils unabhängig für ein Wasserstoffatom, eine Alkoxygruppe oder eine einwertige Kohlenwasserstoffgruppe, vorzugsweise ein Wasserstoffatom, C₁-C₆-Alkoxy oder C₁-C₆-Alkyl, stehen und p und q jeweils unabhängig 1 oder 2, vorzugsweise 1, sind und
n für die durchschnittliche Zahl von Wiederholungseinheiten steht,
wobei das Verfahren Folgendes umfasst:
(a) Lösen mindestens eines Diols der Formel (I) in einer wässrigen Alkalilösung 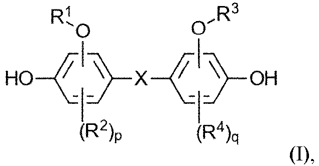 wobei in Formel (I)
X jeweils unabhängig für eine Einfachbindung, -O-, -S-, -S(O)-, -S(O)₂-, -C(O)- oder eine organische Gruppe mit 1 bis 18 Kohlenstoffatomen steht, wobei die organische Gruppe mit 1 bis 18 Kohlenstoffatomen linear, verzweigt oder cyclisch, aromatisch oder nichtaromatisch sein kann und ferner Heteroatome wie Halogene, Sauerstoff, Stickstoff, Schwefel, Silicium oder Phosphor umfassen kann,
R¹ und R³ jeweils unabhängig für eine einwertige Kohlenwasserstoffgruppe, vorzugsweise C₁-C₂₆-Alkyl, C₇-C₂₆-Alkylaryl oder C₇-C₂₆-Aralkyl, stehen,
R² und R⁴ jeweils unabhängig für ein Wasserstoffatom, eine Alkoxygruppe oder eine einwertige Kohlenwasserstoffgruppe, vorzugsweise ein Wasserstoffatom, C₁-C₆-Alkoxy oder C₁-C₆-Alkyl, stehen und p und q jeweils unabhängig 1 oder 2, vorzugsweise 1, sind, und
gegebenenfalls Zugeben mindestens eines Kettenabbrechers,
gegebenenfalls Zugeben mindestens eines Katalysators und gegebenenfalls Zugeben zusätzlicher wässriger Alkalilösung,
was eine Lösung ergibt,
(b) Zugeben eines organischen Lösungsmittels, das zum Lösen von Polycarbonat geeignet ist, zu der Lösung aus Schritt (a) und dadurch Erhalten einer Mischung,
(c) Zugeben von Phosgen zu der Mischung aus Schritt (b) und gegebenenfalls Zugeben zusätzlicher wässriger Alkalilösung,
(d) Umsetzen der Mischung aus Schritt (c) für 2 bis 30 Minuten, vorzugsweise 2 bis 20 Minuten, ganz besonders bevorzugt 2 bis 5 Minuten,
(e) gegebenenfalls Zugeben mindestens eines Kettenabbrechers zu der Mischung aus Schritt (d) mit der Maßgabe, dass in dem Fall, dass in Schritt (a) kein Kettenabbrecher zugegeben wurde, die Zugabe mindestens eines Kettenabbrechers in Schritt (e) obligatorisch ist, und
gegebenenfalls Zugeben mindestens eines Katalysators, gegebenenfalls Zugeben zusätzlicher wässriger Alkalilösung,
und in dem Fall, dass in diesem Schritt mindestens ein Kettenabbrecher und/oder mindestens ein Katalysator zugegeben wird, Umsetzen der erhaltenen Mischung für 2 bis 60 Minuten, vorzugsweise 2 bis 20 Minuten, ganz besonders bevorzugt 2 bis 5 Minuten,
(f) gegebenenfalls Zugeben mindestens eines Katalysators zu der Mischung aus Schritt (d) bzw. Schritt (e), je nachdem, welcher Schritt zuletzt durchgeführt wird, mit der Maßgabe, dass in dem Fall, dass weder in Schritt (a) noch in Schritt (e) ein Katalysator zugegeben wurde, die Zugabe mindestens eines Katalysators in Schritt (f) obligatorisch ist,
und in dem Fall, dass in diesem Schritt mindestens ein Katalysator zugegeben wird, Umsetzen der erhaltenen Mischung für 2 bis 60 Minuten, vorzugsweise 10 bis 50 Minuten, weiter bevorzugt 15 bis 45 Minuten, ganz besonders bevorzugt 25 bis 35 Minuten,
(g) Bestimmen des pH-Werts der nach Schritt (d), (e) bzw. (f) erhaltenen Mischung, je nachdem, welcher Schritt zuletzt durchgeführt wird, erhaltenen Mischung und gegebenenfalls Einstellen des pH-Werts durch Zugabe zusätzlicher wässriger Alkalilösung derart, dass der resultierende pH-Wert mindestens 10,0 beträgt,
und in dem Fall, dass in diesem Schritt zusätzliche wässrige Alkalilösung zugegeben wird, Umsetzen der Mischung für 2 bis 30 Minuten, vorzugsweise 2 bis 20 Minuten, ganz besonders bevorzugt 2 bis 5 Minuten.

10. Verfahren nach Anspruch 9, **dadurch gekennzeichnet, dass** Schritt (e) und/oder Schritt (f) obligatorisch durchgeführt wird.

11. Verfahren nach Anspruch 9 oder 10, **dadurch gekennzeichnet, dass** Schritt (e) obligatorisch durchgeführt wird und mindestens der mindestens eine Kettenabbrecher zugegeben wird.

12. Verfahren nach einem der Ansprüche 9 bis 11, **dadurch gekennzeichnet, dass** in mindestens einem der Schritte (a), (c) oder (e) der pH-Wert vor der fakultativen Zugabe zusätzlicher wässriger Alkalilösung bestimmt wird und gegebenenfalls der pH-Wert durch Zugabe zusätzlicher wässriger Alkalilösung so eingestellt wird, dass der resultierende pH-Wert mindestens 10,0 beträgt.

13. Verfahren nach einem der Ansprüche 9 bis 12, **dadurch gekennzeichnet, dass** der mindestens eine Katalysator aus der Gruppe bestehend aus tertiären Aminen, quartären Ammoniumsalzen, quartären Phosphoniumsalzen und Mischungen davon ausgewählt wird.

14. Verfahren nach einem der Ansprüche 9 bis 13, **dadurch gekennzeichnet, dass** der mindestens eine Kettenabbrecher aus der Gruppe bestehend aus monocyclischen Phenolen, C₁-C₂₂-alkylsubstituierten Phenolen, Monoethern von Diphenolen, alkylsubstituierten Phenolen mit verzweigten Alkylsubstituenten mit 8 bis 9 Kohlenstoffatomen, 4-substituierten 2-Hydroxybenzophenonen, Arylsalicylaten, Monoestern von Diphenolen, 2-(2-Hydroxyaryl)-1,3,5-triazinen, aromatischen Monocarbonsäurechloriden und aromatischen polycyclischen Monocarbonsäurechloriden ausgewählt wird.

15. Polycarbonat nach einem der Ansprüche 9 bis 14, **dadurch gekennzeichnet, dass** in den Formeln (1) und (I) X jeweils unabhängig für ein substituiertes oder unsubstituiertes C₃-C₁₈-Cycloalkyliden, ein C₁-C₁₈-Alkyliden der Formel -C(R^{c}) (R^{d})-, wobei R^{c} und R^{d} jeweils unabhängig Wasserstoff, C₁-C₁₂-Alkyl, C₁-C₁₂-Cycloalkyl, C₇-C₁₂-Arylalkyl, C₁-C₁₂-Heteroalkyl oder cyclisches C₇-C₁₂-Heteroarylalkyl sind, oder eine Gruppe der Formel - C(=R^{c})-, wobei R^{c} eine zweiwertige C₁-C₁₂-Kohlenwasserstoffgruppe ist, steht,
R¹ und R³ jeweils unabhängig für C₁-C₂₆-Alkyl, C₇-C₂₆-Alkylaryl oder C₇-C₂₆-Aralkyl stehen,
R² und R⁴ jeweils unabhängig für ein Wasserstoffatom, C₁-C₆-Alkoxy oder C₁-C₆-Alkyl stehen und
p und q jeweils unabhängig 1 sind.

## Revendications

1. Polycarbonate comprenant au moins 30 % en poids de motifs structuraux de formule (1), le % en poids étant basé sur le poids total du polycarbonate, 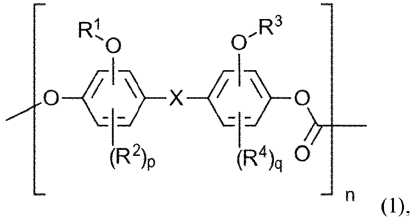 dans lequel
chaque X représente indépendamment une simple liaison, - O-, -S-, -S(O)-, -S(O)₂-, -C(O)-, ou un groupe organique de 1 à 18 atomes de carbone, le groupe organique ayant de 1 à 18 atomes de carbone pouvant être linéaire, ramifié ou cyclique, aromatique ou non aromatique, et pouvant en outre comprendre des hétéroatomes tels que des halogènes, oxygène, azote, soufre, silicium ou phosphore, chacun de R¹ et R³ représente indépendamment un groupe hydrocarboné monovalent, de préférence en C₁-C₂₆-alkyle, C₇-C₂₆ alkylaryle ou C₇-C₂₆-aralkyle,
chacun de R² et R⁴ représente indépendamment un atome d'hydrogène, un groupe alcoxy, ou un groupe hydrocarboné monovalent, de préférence un atome d'hydrogène, C₁-C₆-alcoxy ou C₁-C₆-alkyle, et
chacun de p et q est indépendamment 1 ou 2, de préférence 1 et
n représente le nombre moyen de motifs répétitifs,
**caractérisé en ce que** le polycarbonate est terminé par au moins un groupe aromatique qui peut éventuellement être substitué par au moins un groupe alkyle C₁-C₆, a une teneur totale en chlore saponifiable, déterminée comme indiqué dans la description, de 0,2 ppm à 19 ppm par rapport à la masse du polycarbonate et un poids moléculaire moyen en nombre de 8 000 g/mol à 20 000 g/mol déterminé par chromatographie à perméation de gel dans le dichlorométhane en utilisant un étalonnage de bisphénol A-polycarbonate.

2. Polycarbonate selon la revendication 1, **caractérisé en ce que** dans la formule (1)
chaque X représente indépendamment un cycloalkylidène en C₃-C₁₈ substitué ou non substitué ; un alkylidène en C₁-C₁₈ de formule -C(R^{c})(R^{d})- dans laquelle R^{c} et R^{d} sont chacun indépendamment hydrogène, alkyle en C₁-C₁₂, cycloalkyle en C₁-C₁₂, arylalkyle en C₇-C₁₂, hétéroalkyle en C₁-C₁₂, ou hétéroarylalkyle cyclique en C₇-C₁₂ ; ou un groupe de la formule -C(=R^{c})- dans laquelle R^{c} est un groupe hydrocarboné divalent en C₁-C₁₂,
chacun de R¹ et R³ représente indépendamment C₁-C₂₆-alkyle, C₇-C₂₆-alkylaryle ou C₇-C₂₆-aralkyle,
chacun de R² et R⁴ représente indépendamment un atome d'hydrogène, C₁-C₆-alcoxy ou C₁-C₆-alkyle, et
chacun de p et q est indépendamment 1 et
n représente le nombre moyen de motifs répétitifs.

3. Polycarbonate selon la revendication 1 ou 2, **caractérisé en ce que** dans la formule (1)
chaque X représente indépendamment un alkylidène en C₁-C₆ de la formule -C(R^{c})(R^{d})- dans laquelle R^{c} et R^{d} sont chacun indépendamment hydrogène ou alkyle en C₁-C₅.

4. Polycarbonate selon l'une quelconque des revendications 1 à 3, **caractérisé en ce que** dans la formule (1)
chaque X représente indépendamment un alkylidène en C₁-C₄ de formule -C(R^{c})(R⁴)- dans laquelle R^{c} et R^{d} sont chacun indépendamment hydrogène ou alkyle en C₁-C₃
chacun de R¹ et R³ représente indépendamment méthyle ou éthyle,
chacun de R² et R⁴ représente indépendamment un atome d'hydrogène, méthyle, éthyle ou propyle et n représente le nombre moyen de motifs répétitifs.

5. Polycarbonate selon l'une quelconque des revendications 1 à 4, **caractérisé en ce que** le polycarbonate comprend en outre au moins un motif structural choisi dans le groupe des motifs structuraux de formule (2) à (10), (IIa), (IIb), (IIc), (IId), (IIe) et (IIf) 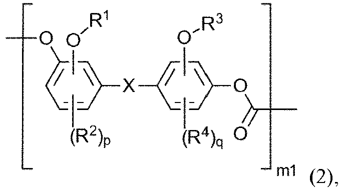
dans lesquelles X, R² à R⁴, p et q sont tels que définis dans l'une quelconque des revendications 1 à 4, et m1 représente le nombre moyen de motifs répétitifs ; 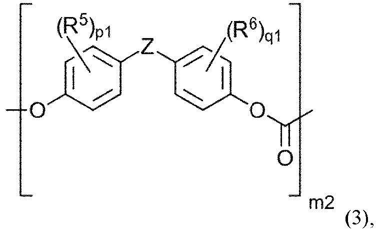
dans lesquelles chaque Z représente indépendamment une simple liaison, -S(=O)₂-, -C(=O)-, -O-, -S-, -S(=O)-, - CH(CN)-, C₁-C₆-alkylène linéaire ou ramifié qui comprend éventuellement au moins un groupe carbonyle, comprend éventuellement au moins un atome d'halogène et/ou est éventuellement interrompu par au moins un hétéroatome, C₂-C₁₀-alkylidène qui comprend éventuellement au moins une double liaison carbone-carbone, comprend éventuellement au moins un groupe carbonyle et/ou comprend éventuellement au moins un atome d'halogène, C₅-C₁₂-cycloalkylène, où le groupe cycloaliphatique est condensé à au moins un cycle autre cycloaliphatique, C₃-C₁₃-cycloalkylidène dans lequel le groupe cycloaliphatique est éventuellement condensé à au moins un cycle cycloaliphatique et/ou à au moins un cycle aromatique, C₇-C₂₀-aralkylidène, C₈-C₂₀-aralkylène, C₆-C₁₂-arylène éventuellement qui est condensé à d'autres cycles aromatiques qui peuvent éventuellement comprendre au moins un hétéroatome, formule (B1-A), formule (B1-B), formule (B1-C) ou formule (B1-D) 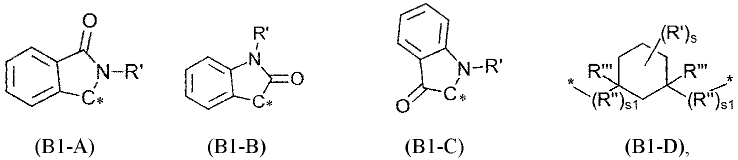
dans lesquelles, dans les formules (B1-A), (B1-B) et (B1-C) chaque R' représente indépendamment un alkyle en C₁-C₄ linéaire, alkyle en C₃-C₄ ramifié, aralkyle ou aryle et le « C* » indique l'atome de carbone quaternaire qui se trouve à la position indiquée par « Z » dans la formule (3), et
dans lesquelles, dans la formule (B1-D) chaque R' représente indépendamment un alkyle linéaire en C₁-C₄, alkyle en C₃-C₄ ramifié, chaque R" représente indépendamment un alkylène en C₁-C₄ linéaire, alkylène en C₃-C₄ ramifié, chaque R‴ représente indépendamment H ou alkyle en C₁-C₃ linéaire, s est 0 à 2 et chaque s1 est indépendamment 0 ou 1, et les « * » indiquent les liaisons qui lient « Z » aux cycles aromatiques dans la formule (3),
chaque R⁵ et R⁶ représente indépendamment H, C₁-C₁₈-alkyle, C₅-C₆-cycloalkyle, C₁-C₃-alcényle-, C₁-C₁₈-alcoxy, phénoxy, atome d'halogène, aryle en C₆-C₁₈ ou aralkyle en C₇-C₁₈,
chacun de p1 et q1 est 1 à 4 et
m2 représente le nombre moyen de motifs répétitifs ; 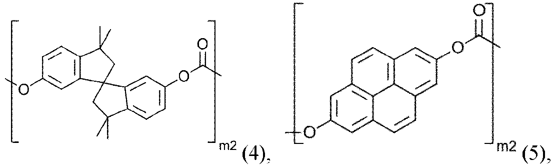 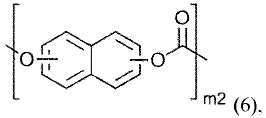
dans lesquelles, dans les formules (4) à (6), m2 représente le nombre moyen de motifs répétitifs ; 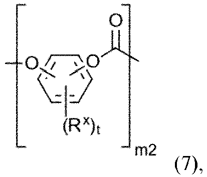
dans lesquelles chaque R^{x} représente indépendamment alkyle en C₁-C₆ linéaire ou ramifié, aryle en C₁-C₁₂, aralkyle en C₁-C₈ ou un atome d'halogène, t est 0 à 4 et m2 représente le nombre moyen de motifs répétitifs ; 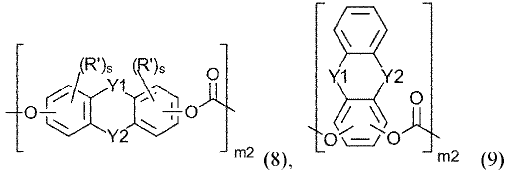
dans lesquelles, dans les formules (8) et (9), chaque Y1 représente indépendamment oxygène, soufre ou N-R^{y}, où R^{y} est H ou -CH₃, chaque Y2 représente indépendamment une simple liaison, oxygène, soufre ou N-R^{y} tel que défini ci-dessus et m2 représente le nombre moyen de motifs répétitifs et, dans la formule (8), chaque R' représente indépendamment un alkyle en C₁-C₄ linéaire, alkyle en C₃-C₄ ramifié, aralkyle ou aryle et s est 0 à 2 ; 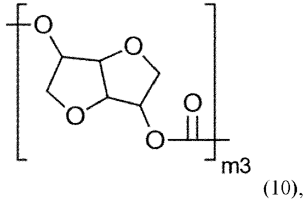
dans lesquelles m3 représente le nombre moyen de motifs répétitifs ; 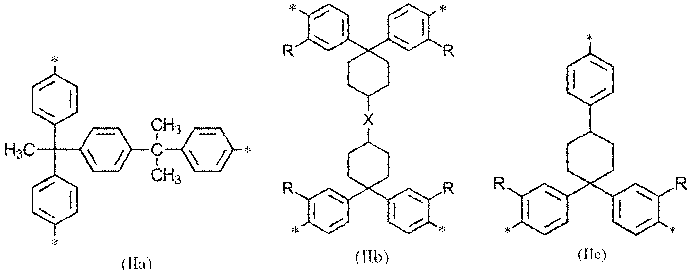 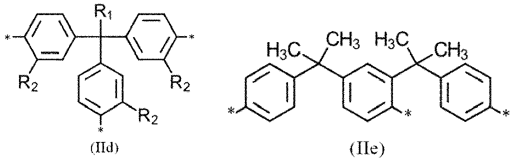 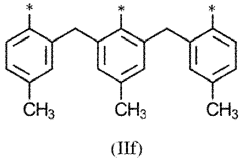
dans lesquelles les « * » représentent la connexion du point de réticulation à la chaîne de polymère de polycarbonate et dans lesquelles
R dans la formule (IIb) et (IIc) est indépendamment choisi dans le groupe constitué par H et alkyle, de préférence H et méthyle,
X dans la formule (IIb) est choisi dans le groupe constitué par alkyle linéaire ou ramifié et une simple liaison, de préférence C(CH₃)₂ et une simple liaison,
R₁ dans la formule (IId) est choisi dans le groupe constitué par H et alkyle, de préférence H et méthyle, et
R₂ dans la formule (IId) est indépendamment choisi dans le groupe constitué par H et alkyle, de préférence H et méthyle.

6. Polycarbonate selon l'une quelconque des revendications 1 à 5, dans lequel l'au moins un groupe aromatique qui termine les chaînes de polycarbonate et qui peut éventuellement être substitué par au moins un groupe alkyle en C₁-C₆ est choisi dans le groupe constitué par les formules (5a), (6a), (7a), (8a) et (9a), dans lesquelles 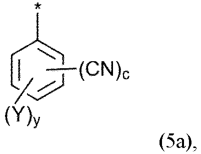
dans lesquelles chaque Y représente indépendamment un atome d'halogène, C₁-C₃-alkyle, C₁-C₃-alcoxy, C₇-C₁₂-arylalkyle, C₇-C₁₂-alkylaryle ou un groupe nitro,
y est 0 à 4, et c est 1 à 5, sous réserve que y+c soit 1 à 5, 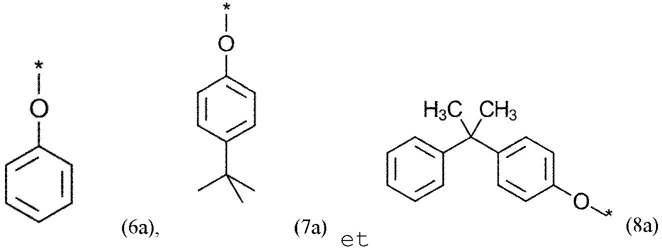
et chaque « * » indique la position, qui lie la structure de formule (5a), (6a), (7a) ou (8a) au polycarbonate.

7. Composé de moulage comprenant le polycarbonate selon l'une quelconque des revendications 1 à 6.

8. Article moulé comprenant le polycarbonate selon l'une quelconque des revendications 1 à 6.

9. Procédé de préparation d'un polycarbonate comprenant au moins 30 % en poids de motifs structuraux de formule (1), le % en poids étant basé sur le poids total du polycarbonate, 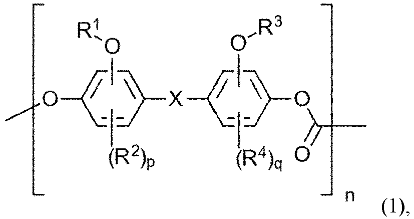 dans lequel dans la formule (1)
chaque X représente indépendamment une simple liaison, - O-, -S-, -S(O)-, -S(O)₂-, -C(O)-, ou un groupe organique de 1 à 18 atomes de carbone, le groupe organique ayant de 1 à 18 atomes de carbone pouvant être linéaire, ramifié ou cyclique, aromatique ou non aromatique, et pouvant en outre comprendre des hétéroatomes tels que des halogènes, oxygène, azote, soufre, silicium ou phosphore, chacun de R¹ et R³ représente indépendamment un groupe hydrocarboné monovalent, de préférence en C₁-C₂₆-alkyle, C₇-C₂₄ alkylaryle ou C₇-C₂₆-aralkyle,
chacun de R² et R⁴ représente indépendamment un atome d'hydrogène, un groupe alcoxy, ou un groupe hydrocarboné monovalent, de préférence un atome d'hydrogène, C₁-C₆-alcoxy ou C₁-C₆-alkyle, et
chacun de p et q est indépendamment 1 ou 2, de préférence 1 et
n représente le nombre moyen de motifs répétitifs,
le procédé comprenant
(a) la dissolution d'au moins un diol de formule (I) dans une solution aqueuse alcaline 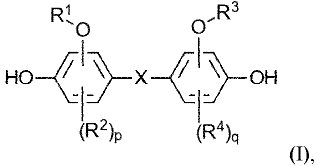 dans lequel dans la formule (I)
chaque X représente indépendamment une simple liaison, - O-, -S-, -S(O)-, -S(O)₂-, -C(O)-, ou un groupe organique de 1 à 18 atomes de carbone, le groupe organique ayant de 1 à 18 atomes de carbone pouvant être linéaire, ramifié ou cyclique, aromatique ou non aromatique, et pouvant en outre comprendre des hétéroatomes tels que des halogènes, oxygène, azote, soufre, silicium ou phosphore, chacun de R¹ et R³ représente indépendamment un groupe hydrocarboné monovalent, de préférence en C₁-C₂₆-alkyle, C₇-C₂₆ alkylaryle ou C₇-C₂₆-aralkyle,
chacun de R² et R⁴ représente indépendamment un atome d'hydrogène, un groupe alcoxy, ou un groupe hydrocarboné monovalent, de préférence un atome d'hydrogène, C₁-C₆-alcoxy ou C₁-C₆-alkyle, et
chacun de p et q est indépendamment 1 ou 2, de préférence 1 et
éventuellement l'ajout d'au moins un terminateur de chaîne,
éventuellement l'ajout d'au moins un catalyseur et éventuellement l'ajout de solution aqueuse alcaline supplémentaire,
pour conduire à une solution,
(b) l'ajout d'un solvant organique approprié pour dissoudre le polycarbonate dans la solution de l'étape (a) et obtenir ainsi un mélange,
(c) l'ajout de phosgène dans le mélange de l'étape (b) et éventuellement l'ajout de solution aqueuse alcaline supplémentaire,
(d) la mise en réaction du mélange de l'étape (c) pendant 2 à 30 minutes, de préférence 2 à 20 minutes, le plus préférablement 2 à 5 minutes,
(e) éventuellement l'ajout d'au moins un terminateur de chaîne au mélange de l'étape (d) sous réserve que dans le cas où aucun terminateur de chaîne n'a été ajouté à l'étape (a), l'ajout d'au moins un terminateur de chaîne à l'étape (e) est obligatoire et
éventuellement l'ajout d'au moins un catalyseur,
éventuellement l'ajout de solution aqueuse alcaline supplémentaire,
et dans le cas où au moins un terminateur de chaîne et/ou au moins un catalyseur est ajouté à cette étape, la mise en réaction du mélange résultant pendant 2 à 60 minutes, de préférence 2 à 20 minutes, le plus préférablement 2 à 5 minutes,
(f) éventuellement l'ajout d'au moins un catalyseur au mélange de l'étape (d) ou de l'étape (e), quelle que soit l'étape effectuée en dernier, sous réserve qu'au cas où aucun catalyseur n'a été ajouté ni à l'étape (a) ni à l'étape (e), l'ajout d'au moins un catalyseur à l'étape (f) est obligatoire,
et dans le cas où au moins un catalyseur est ajouté dans cette étape, la mise en réaction du mélange résultant pendant 2 à 60 minutes, de préférence 10 à 50 minutes, plus préférablement 15 à 45 minutes, le plus préférablement 25 à 35 minutes,
(g) la détermination du pH du mélange obtenu après l'étape (d), (e) ou (f), quelle que soit l'étape effectuée en dernier, et, si cela est requis, l'ajustement du pH par l'ajout d'une solution aqueuse alcaline supplémentaire de manière à ce que le pH résultant soit d'au moins 10,0
et dans le cas où une solution aqueuse alcaline supplémentaire est ajoutée dans cette étape, la mise en réaction du mélange pendant 2 à 30 minutes, de préférence 2 à 20 minutes, le plus préférablement 2 à 5 minutes.

10. Procédé selon la revendication 9, **caractérisé en ce que** l'étape (e) et/ou l'étape (f) est effectuée de manière obligatoire.

11. Procédé selon l'une quelconque des revendications 9 ou 10, **caractérisé en ce que** dans l'étape (e) est effectuée de manière obligatoire et au moins l'au moins un terminateur de chaîne est ajouté.

12. Procédé selon l'une quelconque des revendications 9 à 11, **caractérisé en ce que** dans au moins l'une des étapes (a), (c) ou (e), le pH est déterminé avant l'ajout éventuel d'une solution aqueuse alcaline supplémentaire et, le cas échéant, le pH est ajusté par l'ajout d'une solution aqueuse alcaline supplémentaire de sorte que le pH résultant soit d'au moins 10,0.

13. Procédé selon l'une quelconque des revendications 9 à 12, **caractérisé en ce que** l'au moins un catalyseur est choisi dans le groupe constitué par les amines tertiaires, les sels d'ammonium quaternaire, les sels de phosphonium quaternaire et leurs mélanges.

14. Procédé selon l'une quelconque des revendications 9 à 13, **caractérisé en ce que** l'au moins un terminateur de chaîne est choisi dans le groupe constitué par les phénols monocycliques, les phénols substitués par alkyle en C₁-C₂₂, les monoéthers de diphénols, les phénols substitués par alkyle comportant des substituants alkyle à chaîne ramifiée ayant 8 à 9 atomes de carbone, les 2-hydroxybenzophénones substituées en position 4, les salicylates d'aryle, les monoesters de diphénols, les 2-(2-hydroxyaryl)-1,3,5-triazines, les chlorures d'acides monocarboxyliques aromatiques, les chlorures d'acides polycycliques et monocarboxyliques aromatiques.

15. Procédé selon l'une quelconque des revendications 9 à 14, **caractérisé en ce que** dans les formules (1) et (I) chaque X représente indépendamment un cycloalkylidène en C₃-C₁₈ substitué ou non substitué ; un alkylidène en C₁-C₁₈ de formule -C(R^{c})(R^{d})- dans laquelle R^{c} et R^{d} sont chacun indépendamment hydrogène, alkyle en C₁-C₁₂, cycloalkyle en C₁-C₁₂, arylalkyle en C₇-C₁₂, hétéroalkyle en C₁-C₁₂, ou hétéroarylalkyle cyclique en C₇-C₁₂ ; ou un groupe de la formule -C(=R^{c})- dans laquelle R^{c} est un groupe hydrocarboné divalent en C₁-C₁₂,
chacun de R¹ et R³ représente indépendamment C₁-C₂₆-alkyle, C₇-C₂₆-alkylaryle ou C₇-C₂₆-aralkyle,
chacun de R² et R⁴ représente indépendamment un atome d'hydrogène, C₁-C₆-alcoxy ou C₁-C₆-alkyle, et
chacun de p et q est indépendamment 1.
